(19) Europäisches Patentamt
European Patent Office
Office européen des brevets

(11) EP 2 022 810 B1

(12) **EUROPÄISCHE PATENTSCHRIFT**

(45) Veröffentlichungstag und Bekanntmachung des Hinweises auf die Patenterteilung:
**04.04.2012 Patentblatt 2012/14**

(51) Int Cl.:
***C08G 69/26*** *(2006.01)* ***C08G 69/40*** *(2006.01)*

(21) Anmeldenummer: **07113101.5**

(22) Anmeldetag: **25.07.2007**

(54) **Transparente Polyamid-Elastomere**

Transparent polyamide elastomers

Polyamide élastomère transparent

(84) Benannte Vertragsstaaten:
**AT BE BG CH CY CZ DE DK EE ES FI FR GB GR HU IE IS IT LI LT LU LV MC MT NL PL PT RO SE SI SK TR**

(43) Veröffentlichungstag der Anmeldung:
**11.02.2009 Patentblatt 2009/07**

(73) Patentinhaber: **EMS-PATENT AG**
**7013 Domat / Ems (CH)**

(72) Erfinder:
- **Hoffmann, Botho**
  **7013 Domat/Ems (CH)**
- **Hoff, Heinz**
  **7015 Tamins (CH)**

(74) Vertreter: **Bremi, Tobias Hans**
**Isler & Pedrazzini AG**
**Gotthardstrasse 53**
**Postfach 1772**
**8027 Zürich (CH)**

(56) Entgegenhaltungen:
**EP-A- 1 369 447**
**EP-A- 1 712 581**
**EP-A- 1 783 156**
**EP-A- 1 788 025**
**WO-A-2007/074086**
**US-A1- 2004 013 862**
**US-A1- 2005 165 210**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

TECHNISCHES GEBIET

Die vorliegende Erfindung betrifft ein transparentes Polyamid-Elastomer mit Polyamid-Segmenten und einem weiteren Segment, welches weitere Segment insbesondere bevorzugt als Ether-, Ester-, Polyester-, und/oder Polyetherester-Segment ausgebildet ist, sowie Anwendungen davon.

STAND DER TECHNIK

Copolymere aus Polyamiden und einem weiteren Segment, beispielsweise in Form eines Diols, Polyesters, Ethers etc. finden, insbesondere in Form von Polyesteramiden, Polyetheresteramiden oder Polyetheramiden weite industrielle Anwendung.

Beispielhaft sollen einige derartige Systeme anhand von Patentliteratur vorgestellt werden.

Die EP 0 163 902 A1 beschreibt ein Verfahren zur Herstellung von Polyetheresteramiden unter Verwendung von Antimonoxid. Als Polyamid-Segmente werden neben den teilkristallinen aliphatischen PA-Systemen, wie z.B. PA12 oder PA66, auch PACM6 und PACM12 erwähnt.

In der DE 101 95 908 werden in einem Extruder hochmolekulare Thermoplaste (Polyamide, Polyester, Polycarbonate) mit speziellen Additiven gemischt, die die Austauschreaktion zwischen den Polymeren beschleunigen sollen. Ziel ist es, nicht mehr als kleine Konzentrationen an Blockcopolymeren zu erzeugen, die eine verträglichkeitsvermittelnde Funktion zwischen den unterschiedlichsten Thermoplasten übernehmen sollen, so dass gewisse Recycling-Aufgaben erfüllt werden können. Die gezielte Herstellung einer Polyamid-Elastomers wird nicht beschrieben.

Die EP 1 783 157 A1 beschreibt ein Verfahren zur Herstellung von Polyetheresteramiden, bei dem neben dem Polyetherdiol und der Polyamiddicarbonsäure ein Triol eingesetzt werden muss. Es werden keine Aussagen bzgl. der Transparenz der Blockcopolymere gemacht.

Für viele Anwendungen wird dabei gefordert, dass der Werkstoff eine hohe Transparenz für Licht im sichtbaren Bereich aufweist:

In diesem Zusammenhang beschreibt beispielsweise die EP 0 303 489 A1 antistatische Formmassen auf Basis von Polyetheresteramiden, die eine hohe Transparenz und einen tiefen Haze aufweisen. Als Ester- bzw. Polyesteranteil werden nebeneinander Polyetherdiole und spezielle aromatische Diole verwendet. In den Beispielen bildet ausschliesslich PA6 den Polyamid-Anteil.

Die EP 0 221 188 A1 beschreibt Polyetheresteramide auf Basis von PA6- und Copolymeren aus Tetramethylenglykol und Neopentylglykol, die eine hohe Transparenz aufweisen sollen. Transmissionswerte werden nicht genannt, der Haze, gemessen an 1 mm dicken Probekörpern, liegt unterhalb von 75%. Dieser recht hohe Wert und die Tatsache, dass ein gutkristallisierendes Polyamid-Segment verwendet wurde, zeigen, dass die mittels dieser Formmassen erzielbare Transparenz an Formteilen niedrig ist.

Die EP 0 313 861 A1 beschreibt Polyetheramide auf Basis verschiedener Polyamid-Segmente und Polyoxyalkylendiaminen, die praktisch keine Esterbindungen enthalten und transparent sein sollen. Allerdings werden bzgl. der Transparenz keine objektiv bewertbaren Angaben gemacht. In den Beispielen werden folgende PA-Systeme genannt: PACMI, BACI, 61.

Die DE 24 05 646 C3 beschreibt Polyether-Polyamid-Blockcopolymere, die sich aus MXD6-Segmenten und Polyether-Segmenten zusammensetzen. Die Blockcolymere sollen u.a. eine hohe Transparenz besitzen.

Des weiteren beschreibt die US 2005/0165210 A1 ein Polyetheramid-Blockcopolymer, welches ein Monomer im PA-Hartblock enthält, das die Kristallinität stört und damit die Transparenz von Formteilen erhöhen soll. Dieses Monomer kann beispielsweise ein cycloaliphatisches Diamin, wie z.B. PACM oder IPD, oder ein Lactam sein. Der kristalline Anteil im Polyamid-Segment beträgt mindestens 55%, bevorzugt mindestens 70% bezogen auf die Polyamid-bildenden Monomere. Es werden Transmissionswerte, gemessen an Platten der Dimension 100x100x2 mm bei 560nm, angegeben, die 77 und 78% betragen. Die entsprechenden Hazewerte liegen bei 12 und 13%.

Die EP 1 314 750 A1 bezieht sich auf Polyetheramide, hergestellt aus teilkristallinen Polyamid-Segmenten auf Basis von Aminocarbonsäuren und/oder Lactamen und einem speziellen Polyetherdiamin (ABA-Dreiblock-Polyetherdiamin). Für den Haze, gemessen an 1 mm dicken Platten, werden Werte von 11 bis 46 % angegeben. Transmissionswerte werden nicht offenbart.

Zu guter letzt beschreibt die US 5,280,087 einen zweistufigen Prozess zur Herstellung von Polyetheresteramiden, wobei zunächst Lactam und Polyoxyalkylengylkole miteinander umgesetzt werden und erst nachfolgend die Dicarbonsäure zugegeben und kondensiert wird. Produkte werden als transparent bezeichnet, quantitative Aussagen werden aber nicht gemacht.

Aus der WO 2007/074086 sind vernetzbare, thermoplastische Polyamidformmassen bekannt. Die Polyamide sind dabei aus einer Gruppe ausgewählt, die aus amorphen oder mikrokristallinen Polyamiden, aus Copolyamiden

derselben und deren Blends sowie aus Blends aus solchen Polyamiden mit teilkristallinen Polyamiden, besteht. Eine erfindungsgemässe Polyamidformmasse ist dabei dadurch gekennzeichnet, dass sie ein Vernetzungsadditiv umfasst, das unter energiereicher Bestrahlung das Erzeugen von vernetzten, aus dieser Polyamidformmasse geformten Formteilen mit einem Tg-Wert von > 140 °C und bei Temperaturen von > 180 °C eine Formbeständigkeit von mindestens 90 % bewirkt. Dabei weisen diese Polyamide einen im wesentlichen linearen Aufbau und deren Monomere keine olefinischen C=C - Doppelbindungen auf. Offenbart werden zudem entsprechende vernetzte, aus einer Polyamidformmasse hergestellte Polyamidformteile sowie die Verwendung dieser Polyamidformmasse zum Herstellen dieser vernetzten Polyamidformteile. Ebenfalls mehr oder weniger transparente Polyamide des generell gleichen Typs werden in den Schriften US 2004/013862, EP 1369447, EP 1712581 sowie EP 1788025 beschrieben. Elastomere, die neben einem Polyamid-Hartsegment andere Segmente umfassen könnten, werden in diesen Dokumenten weder genannt noch nahe gelegt.

DARSTELLUNG DER ERFINDUNG

Der Erfindung liegt demnach unter anderem die Aufgabe zugrunde, ein verbessertes Polyamid-Copolymer respektive Polyamid-Elastomer zur Verfügung zu stellen. Es soll dabei insbesondere durch eine hohe Transparenz ausgezeichnet sein. Diese Aufgabe konnte durch ein Polyamid-Elastomer gelöst werden, welches im Polyamid-Segment einen minimalen Anteil von 10 mol-% eines alkylsubstituierten Bis(aminocyclohexyl)methans als Diamin aufweist. Spezifisch wurde gefunden, dass ein Polyamid-Elastomer oder allgemeiner eine Polyamid-Formmasse aus oder mit wenigstens einem wesentlichen Anteil an einem solchen Elastomer an der allgemeinen Struktur

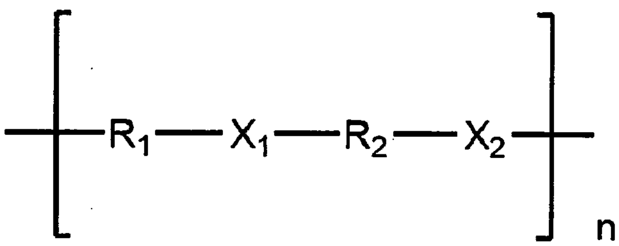

(1)

eine unerwartet hervorragende Transparenz aufweist, wenn $R_1$ ein Polyamid-Segment ist, gebildet aus

(a) 10-100 mol-% alkylsubstituiertem Bis(aminocyclohexyl)methan und/oder Bis(aminocyclohexyl)propan und

0 - 90 mol-% anderen cycloaliphatischen C6-C36 Diaminen und/oder aliphatischen C2-C36 Diaminen und/oder aromatischen C6-C36 Diaminen (wobei die Konzentrationsangaben jeweils bezogen sind auf die Gesamtmenge Diamin im Polyamid-Segment), und

(b) aliphatischen C4-C36-Dicarbonsäuren und/oder cycloaliphatischen C8-C36-Dicarbonsäuren und/oder aromatischen C8-C36-Dicarbonsäuren und
(c) gegebenenfalls Lactamen und/oder Aminocarbonsäuren C6-C12 ist,

und $R_2$ eine Weichsegment-Einheit ist, ausgewählt aus der folgenden Gruppe bivalenter Reste: C2-C5 (bevorzugt C2-C4) Polyoxyalkylen, Polyolefin, Polysiloxan mit zahlenmittlerer Molmasse im Bereich von 200 - 3000 g/mol (bevorzugt 300-2500 g/mol), lineares oder verzweigtes, substituiertes oder unsubstituiertes C2-C36-Alkylen, C6-C36-Cycloalkylen, C6-C20-Aryl, Polycaprolacton, Polyester auf Basis aliphatischer oder cycloaliphatischer Dicarbonsäuren und Diolen, aliphatisches Polycarbonat, sowie Copolymere und Mischungen dieser Elemente
und wobei $X_1$ und $X_2$ unabhängig voneinander Amid- (CONH) oder Ester (COO) - Verknüpfungen/Bindungen darstellen.
Erfindungsgemäss verfügt das transparente Polyamid-Elastomer über eine durch das das Element R2 enthaltende Segment herrührende amorphe Phase, deren Glasübergangstemperatur höchstens 20°C beträgt.
Normalerweise ist $X_1$ gleich wie $X_2$, es ist aber im Prinzip auch möglich, dass die beiden Elemente unterschiedlich sind, wie z.B. bei der gleichzeitigen Kombination von carboxylterminierten Polyamid-Einheiten mit aminterminierten Polyether- und hydroxylterminierten Polyester- bzw. Ester-Einheiten. Bevorzugtermassen handelt es sich beim Elastomer um ein Polyesteramid, ein Polyetheramid oder um ein Polyetheresteramid.

Bei der Interpretation der Strukturformel (1) muss hervorgehoben werden, dass das auf der linken Seite dargestellte Polyamid-Segment $R_1$ im Prinzip die beiden links und rechts davon angeordneten Carbonyl-Gruppen ebenfalls mit umfasst, wenn $R_1$ als Polyamid-Segment bezeichnet wird. Des weiteren muss bei der Interpretation des normalerweise als amorphes Weichsegment ausgebildeten rechten Teils in der Klammer dieses so verstanden werden, dass, wenn $X_1$ und $X_2$ (COO) sind und $R_2$ als C2-C36-Alkylen oder Polyester angegeben ist, dass Weichsegment mit anderen Worten durch ein C2-C36-Alkylendiol oder Polyesterdiol, wie beispielsweise das weiter unten in der Beschreibung angegebene Pripol 2033 oder Priplast 3197, gebildet wird (das Gesamtsystem ist dann ein Polyesteramid). Analog gilt, dass, wenn $X_1$ und $X_2$ (CONH) sind, und beispielsweise $R_2$ als C2-C4 Polyoxyalkylen angegeben ist, das Weichsegment mit anderen Worten durch ein C2-C4 Polyoxyalkylen-Diamin wie beispielsweise das weiter unten in der Beschreibung angegebene Elastamin RP-409 gegeben sein kann (das Gesamtsystem ist dann ein Polyetheramid).

Die erfindungsgemässen Polyamid-Elastomere enthalten Polyamid- sowie Weichsegment-Einheiten, z.B. Polyether- und/oder Polyester-Einheiten, und werden durch Polykondensation der mit reaktiven Endgruppen versehenen Einheiten gebildet. Dabei können die Polyamid-Einheiten sowohl carboxyl- als auch aminterminiert sein. Die Weichsegmente sind je nach Struktur amin-, carboxyl- oder hydroxylterminiert. Die bevorzugten Weichsegment-Einheiten sind Ester- bzw. Polyester- und Polyether-Einheiten. Die Ester- oder Polyester-Einheiten sind carboxyl- oder hydroxylterminiert, während die Polyether-Einheiten Carboxyl- oder Aminoendgruppen tragen. Damit ergeben sich für die bevorzugten Weichsegment-Einheiten folgende Kombinationsmöglichkeiten:

(1) Die Polyamid-Einheit ist carboxyl- und die Ester- oder Polyester-Einheit ist hydroxylterminiert. Das gebildete Copolymer ist dann ein Polyesteramid.
(2) Die Polyamid-Einheit ist carboxyl- und die Polyether-Einheit ist aminterminiert. Das gebildete Copolymer ist dann ein Polyetheramid.
(3) Die Polyamid-Einheit ist amin- und die Polyether-Einheit ist carboxylterminiert. Das gebildete Copolymer ist dann ein Polyetheramid.
(4) Die Polyamid-Einheit ist carboxyl- und die Polyether-Einheit ist hydroxylterminiert. Das gebildete Copolymer ist dann ein Polyetheresteramid.
(5) Die Polyamid-Einheit ist carboxyl- und die Polyether-Einheit amino- und die Polyester- bzw. Ester-Einheit ist hydroxylterminiert. Das gebildete Copolymer ist ein Polyetheresteramid.
(6) Die Polyamid-Einheit ist amin- und die Polyether- und die Polyester-Einheit sind carboxylterminiert. Das gebildete Copolymer ist ein Polyetheresteramid.

Bevorzugt ist dabei, dass, wenn $X_1$ und $X_2$ beide (COO), der Rest $R_2$ gegeben ist als lineares oder verzweigtes, substituiertes oder unsubstituiertes C2-C36-Alkylen, C6-C36-Cycloalkylen, C6-C20-Aryl, Polycaprolacton, Polyester auf Basis aliphatischer oder cycloaliphatischer Dicarbonsäuren und Diolen, aliphatisches Polycarbonat, C2-C4 Polyoxyalkylen sowie Copolymere und Mischungen dieser Elemente.
Ebenfalls bevorzugt ist dabei, dass, wenn $X_1$ und $X_2$ beide (CONH), der Rest $R_2$ gegeben ist als C2-C4 Polyoxyalkylen, Polyolefin, Polysiloxan mit zahlenmittlerer Molmasse im Bereich von 200 - 3000 g/mol (bevorzugt 300-2500 g/mol) sowie Copolymere und Mischungen dieser Elemente.
Gemäss einer bevorzugten Ausführungsform beruht das Polyamid-Segment zu wenigstens 20 mol-%, bevorzugt zu mindestens 30 mol-%, besonderes bevorzugt zu mindestens 40 mol-% auf alkylsubstituiertem Bis(aminocyclohexyl) methan und/oder alkylsubstituiertem Bis(aminocyclohexyl)propan, d.h. beim Polyamid-Segment handelt es sich um ein Copolyamid, oder aber es beruht sogar vollständig auf alkylsubstituiertem Bis(aminocyclohexyl)methan oder Bis(aminocyclohexyl)propan (Homo- oder Copolyamide). Als Alkylsubstituenten werden lineare und/oder verzweigte C1-C6, bevorzugt C1-C4 Alkylgruppen bevorzugt, so insbesondere Methyl-, Ethyl-, Propyl-, Isopropyl- oder Butyl-Gruppen bevorzugt, insbesondere bevorzugt Methylgruppen. In einer besonders bevorzugten Ausführungsform wird als alkylsubstituiertes Bis(aminocyclohexyl)methan MACM (Bis(4-amino-3-methylcyclohexyl)methan) eingesetzt.
Die zahlenmittlere Molmasse des Polyamid-Segmentes wird z.B. durch einen Überschuss an Dicarbonsäure oder Diamin bevorzugtermassen auf 500 bis 5000 g/mol, bevorzugt auf 700 bis 4000 g/mol und besonders bevorzugt auf 750 bis 3000 g/mol eingestellt. Zur Reglung der Molmassse werden bevorzugt diejenigen Dicarbonsäuren oder Diamine eingesetzt, die auch zum Aufbau der Polyamidsegmente verwendet werden. Es können jedoch auch strukturell andere Dicarbonsäuren oder Diamine eingesetzt werden, wie sie später näher beschrieben werden.
Zur Reglung der Molmasse, der relativen Viskosität bzw. der Fliessfähigkeit oder des MVR können dem Ansatz des Polyamidsegementes und/oder dem Ansatz des Polyamid-Elastomeren zusätzlich zu den genannten Dicarbonsäuren oder Diaminen monofunktionelle Regler in Form von Monocarbonsäuren oder Monoaminen zugesetzt werden. Als Regler geeignete, aliphatische, cycloaliphatische oder aromatische Monocarbonsäuren oder Monoamine sind Essigsäure, Propionsäure, Buttersäure, Valeriansäure, Capronsäure, Laurinsäure, Stearinsäure, 2-Ethylhexansäure, Cyclohexansäure, Benzoesäure, Butylamin, Pentylamin, Hexylamin, 2-Ethylhexylamin, n-Octylamin, n-Dodecylamin, n-Tetradecylamin, n-Hexadecylamin, Stearylamin, Cyclohexylamin, 3-(Cyclohexylamino)-propylamin, Methylcyclohexylamin, Dimethylcyclohexylamin, Benzylamin, 2-Phenylethylamin, u.a. Die Regler können einzeln oder in Kombination benutzt werden. Es können auch andere monofunktionelle Verbindungen als Regler eingesetzt werden, die mit einer Amino- oder Säuregruppe reagieren können wie Anhydride, Isocyanate, Säurehalogenide oder Ester. Die übliche Einsatzmenge der Regler liegt zwischen 10 und 200 mmol pro kg Polymer.

Das Polyamid-Elastomer verfügt gemäss einer weiteren Ausführungsform mindestens über eine amorphe Phase, welche bevorzugtermassen von der Weichsegment-Einheit, wie z.B. vom Ether-und/oder Esteranteil, herrührt. Die Glasübergangstemperatur respektive der Glasübergangspunkt dieser amorphen Phase beträgt gemäss einer bevorzugten Ausführungsform höchstens 20°C. Diese amorphe Phase der transparenten Polyesteramide verfügt bevorzugtermassen über einen Glasübergangspunkt von weniger als 0°C, bevorzugt von weniger als -20°C.

Der Begriff transparentes Polyamid-Elastomer respektive transparente Formmasse, wie er in diesem Dokument verwendet wird, soll Polyamid-Elastomere oder daraus gebildete Formmassen bezeichnen, deren Lichttransmission wenigstens 70% beträgt, wenn das Polyamid-Elastomer oder die Formmasse (in reiner Form, d.h. ohne die oben angegebenen weiteren Bestandteile der erfindungsgemässen Formmasse) in Form eines dünnen Plättchens von 2 mm Dicke vorliegt. Die Messung der Lichttransmission wird dabei auf einem UV/VIS Spektrometer der Firma Perkin Elmer im Bereich von 200 bis 800 nm an Rundplatten 70x2 mm durchgeführt. Der Transmissionswert wird für den Wellenlängenbereich zwischen 500 und 700 nm angegeben. Die Rundplatten 70x2 mm werden z.B. dafür auf einer Arburg Spritzgussmaschine im polierten Werkzeug hergestellt, wobei die Zylindertemperatur zwischen 200 und 340 °C und die Werkzeugtemperatur zwischen 20 und 140 °C liegt.

Bevorzugtermassen verfügen das Polyamid-Elastomer und/oder die Formmasse also über eine Transmission von wenigstens 70%, bevorzugt von wenigstens 80%, insbesondere bevorzugt von grösser als 85%.

Für optisch weniger hochwertige Bauteile, oder für Bauteile, bei welchen nur das Reflexionsverhalten relevant ist (beispielsweise Dekorationsartikel), ist auch eine niedrigere Transparenz und sogar eine leichte Trübung möglich.

Weiterhin ist es bevorzugt, wenn das Polyamid-Elastomer und/oder die Formmasse einen Haze von höchstens 20%, bevorzugt höchstens 15%, insbesondere bevorzugt höchstens 10% aufweisen (ASTM 1003, Schichtdicke 2 mm).

Gemäss einer ersten bevorzugten Ausführungsform ist das Polyamid-Elastomer dadurch gekennzeichnet, dass sich wenigstens ein, respektive das einzige vorhandene Polyesteramid, Polyetheramid oder Polyetheresteramid zusammensetzt aus einem 40-95 Gew.-% ausmachenden Polyamid-Anteil ($R_1$) und einem 5-60 Gew.-% ausmachenden Polyester- und/oder Polyether-Anteil ($R_2$). Dabei können die Polyamid- und Polyester- und/oder Polyether-Einheiten als Wiederholungseinheiten im Polyamid-Elastomer statistisch, alternierend oder blockweise angeordnet sein. In einer zweiten bevorzugten Ausführungsform setzt sich das Polyamid-Elastomer aus 50 bis 85 Gew.-% $R_1$ und 15 bis 50 Gew.-% $R_2$ zusammen.

Insbesondere bevorzugt sind aber Polyamid-Elastomere, die amorphe oder mikrokristalline Polyamid-Hartsegmente enthalten. Die amorphen oder mikrokristallinen Polyamid-Hartsegmente der erfindungsgemässen Polyesteramide, Polyetheramide oder Polyetheresteramide besitzen eine zahlenmittlere Molmasse im Bereich von 500 bis 5000 g/mol, bevorzugt im Bereich von 700 bis 4000 g/mol und ganz besonders bevorzugt im Bereich von 750 bis 3000 g/mol.

Wenn ein mikrokristallines Polyamid-Hartsegment respektive Copolyamid-Hartsegment Verwendung findet, so wird bevorzugt, dass dieses mikrokristalline Polyamid-Hartsegment und/oder Copolyamid-Hartsegment eine Schmelzenthalpie im Bereich von 4-40 J/g, insbesondere im Bereich von 4 bis 25 J/g aufweist (gemessen mit Differential Scanning Calorimetry, DSC). Bevorzugtermassen handelt es sich bei mikrokristallinen Polyamid/Copolyamid-Hartsegment-Zusammensetzungen um Polyamid-Systeme, welche, in hochmolekularer Form und ohne weitere Bestandteile verarbeitet, transparente Formteile ergeben. D.h. die Dimension der Kristallite ist unterhalb der Wellenlänge des sichtbaren Lichtes. Bevorzugtermassen verfügt das mikrokristalline Polyamid-Hartsegment über eine Glasübergangstemperatur oberhalb von wenigstens 50°C, bevorzugt von mehr als 80°C und insbesondere bevorzugt von mehr als 100°C sowie über eine Schmelztemperatur von wenigstens 120°C, bevorzugt von wenigstens 135°C und insbesondere von wenigstens 150°C.

Das mikrokristalline Polyamid und/oder Copolyamid-Hartsegment basiert auf alkylsubstituiertem Bis(aminocyclohexyl) methan oder Bis(aminocyclohexyl)propan sowie ggf. anderen cycloaliphatischen Diaminen (z.B. PACM, IPD, BAC) und/ oder aliphatischen C4-C18-Diaminen und/oder Diaminen mit aromatischem Kern (z.B. MXDA oder PXDA).

Bevorzugt wird dabei, dass dieses auf Basis von MACM und aliphatischen Dicarbonsäuren mit 10 bis 36 Kohlenstoffatomen aufgebaut ist, wobei es sich beim anderen cycloaliphatischen Diamin bevorzugtermassen um PACM und/oder IPD (Isophorondiamin) mit oder ohne zusätzliche Substituenten, und insbesondere bevorzugt um ein Copolyamid des Typs MACM/PACM jeweils mit aliphatischen Dicarbonsäuren mit 10 bis 36 Kohlenstoffatomen wie zum Beispiel MACM12/PACM12, handelt. Dies bevorzugtermassen mit einer PACM-Konzentration grösser 40 mol-%, insbesondere grösser 55 mol-%.

Generell steht MACM für die ISO-Bezeichnung Bis-(4-amino-3-methyl-cyclohexyl)-methan, welches unter dem Handelsnamen 3,3'-Dimethyl-4-4'-diaminodicyclohexylmethan als Laromin C260-Typ (CAS Nr. 6864-37-5) kommerziell erhältlich ist. Die Ziffer nach dem Begriff MACM steht jeweils für eine aliphatische lineare Dicarbonsäure (C12 z.B. DDS, Dodecandisäure), mit welcher das Diamin MACM polymerisiert ist.

PACM steht für die ISO-Bezeichnung Bis-(4-aminocyclohexyl)-methan, welches unter dem Handelsnamen 4,4'-Diaminodicyclohexylmethan als Dicykan-Typ (CAS Nr. 1761-71-3) kommerziell erhältlich ist.
Alternativ oder zusätzlich kann es sich, wie bereits erläutert, beim Polyamid-Hartsegment um ein amorphes Polyamid und/oder Copolyamid handeln, dann bevorzugtermassen mit einer Schmelzenthalpie von weniger als 4 J/g (gemessen mit Differential Scanning Calorimetry, DSC).
Gemäss einer bevorzugten Ausführungsform verfügt das amorphe Polyamid-Hartsegment über eine Glasübergangstemperatur oberhalb von wenigstens 50°C, bevorzugt von mehr als 80 °C und insbesondere bevorzugt von mehr als 100 °C.
Eine weitere bevorzugte Ausführungsform ist dadurch gekennzeichnet, dass das amorphe Polyamid- und/oder Copolyamid-Hartsegment auf Basis von MACM, aliphatischen und/oder anderen cycloaliphatischen Diaminen ist, bevorzugt werden amorphe Polyamide des Typs MACMI, MACMI/MACMT, MACMI/MACMT/12, MACMI/12, MACMT/12 wobei der Gehalt an Laurinlactam in diesem Fall bevorzugt kleiner als 50 mol-%, insbesondere kleiner 35 mol-% ist. Dabei steht I für Isophthalsäure.
In einer weiteren Ausführungsform beruht das Polyamid-Hartsegment auf aromatischen Dicarbonsäuren mit 10 bis 18 Kohlenstoffatomen oder von aliphatischen Dicarbonsäuren mit 6 bis 36 C-Atomen oder eine Mischung solcher Homopolyamide und/oder Copolyamide handeln, bevorzugt auf Basis von Lactamen und/oder Aminocarbonsäuren, wobei es sich bei den aromatischen Dicarbonsäuren z.B. um TPS (Terephthalsäure) und/oder IPS (Isophthalsäure) handelt. Das Homopolyamid- und/oder Copolyamid-Hartsegment kann vorteilhafterweise ein Polyamid sein ausgewählt aus der Gruppe: 6I/MACMI/MACMT, 6I/6T/MACMI, MACMI/MACM36, lactamhaltige Polyamide wie 12/MACMI, 12/MACMT, 12/MACM6-18 oder eine Mischung davon. Weitere mögliche Systeme sind: MACM6-18, MACM6-18/PACM6-18 oder daraus gebildete Mischungen.
Die Bezeichnung der Polyamide erfolgt gemäss ISO 1874-1. Dabei steht jeweils I für Isophthalsäure und T für Terephthalsäure.
Weiter ist es vorteilhaft und möglich, dass es sich beim Copolyamid-Hartsegment um ein Polyamid auf Basis wenigstens einer Dicarbonsäure und alkylsubsituiertem Bis(aminocyclohexyl)methan und einem Diamin mit einem aromatischen Kern handelt, bevorzugt auf Basis von MACM und MXD (meta-Xylylendiamin), wobei die Dicarbonsäure aromatisch und/oder aliphatisch sein kann, und wobei es sich z.B. bevorzugt um MACMI/MXDI, MACMI/MXD6 oder MACMI/6I/MXDI, MACMI/6I/MXD6 handelt.
Eine weitere bevorzugte Ausführungsform ist dadurch gekennzeichnet, dass das Polyamid-Elastomer eine Lösungsviskosität ($\eta_{rel}$), gemessen in m-Kresol als 0.5 Gew.-%-Lösung, bei einer Temperatur von 20°C, zwischen 1.3 und 3.0, insbesondere bevorzugt zwischen 1.4 und 2.5, aufweist. Weiterhin ist es bevorzugt, wenn das Polyamid-Elastomer einen Zug-E-Modul von weniger als 1500 MPa, bevorzugt von weniger als 1000 MPa, insbesondere bevorzugt von weniger als 500 MPa aufweist.
In Bezug auf das Polyamid-Elastomer werden folgende strukturelle Ausgangsmaterialien bevorzugt: transparentes Polyesteramid, Polyetheramid oder Polyetheresteramid auf Basis von wenigstens einem Polyamid und auf Basis von wenigstens einem Polyester- und/oder Esteranteil und/oder Polyetheranteil, wobei das Polyamid auf Basis von Dicarbonsäuren und alkylsubsituierten Bis(aminocyclohexyl)methan und gegebenenfalls weiteren Diaminen, und/oder Lactamen und/oder Aminocarbonsäuren ausgebildet sein kann, und der Polyester- und/oder Esteranteil auf Basis eines Diols und einer Dicarbonsäure und/oder einer Hydroxycarbonsäure, und der Polyetheranteil auf Basis eines Polyetherdiamins.
Dicarbonsäure (sowohl für Polyamid- als auch für $R_2$-Anteil, d.h. z.B. Polyester-Anteil):

Die wenigstens eine Dicarbonsäure kann ausgewählt sein aus der folgenden Gruppe: aliphatische C4-C44-Disäure, cycloaliphatische C8-C36-Disäure, aromatische Disäure (bevorzugtermassen TPS, IPS, NDS), sowie Mischungen respektive Kombinationen davon. Bevorzugt ist die wenigstens eine Dicarbonsäure ausgewählt aus der Gruppe: Adipinsäure, Sebazinsäure, Dodekandisäure, Terephthalsäure, Isophthalsäure, Cyclohexandicarbonsäure und Mischungen davon. So insbesondere Bernsteinsäure, Glutarsäure, Adipinsäure, Pimelinsäure, Korksäure, Azelainsäure, Sebazinsäure, Undecandisäure, Dodecandisäure, Brassylsäure, Tetradecandisäure, Pentadecandisäure, Hexadecandisäure, Heptadecandisäure, Octadecandisäure, Nonadecandisäure, Eicosandisäure, Japansäure, Cyclohexandicarbonsäure, insbesondere cis- und/oder trans-Cyclohexan-1,4-dicarbonsäure und/oder cis- und/oder trans-Cyolohexan-1,3-dicarbonsäure (CHDA), Dimerfettsäure mit 36 oder 44 C-Atomen, Isophthalsäure, Terephthalsäure, Naphthalindicarbonsäure.

Diamin (für Polyamid-Anteil):

Diamin ausgewählt aus der Gruppe: Verzweigtes oder unverzweigtes aliphatisches C4-C18-Diamin, cycloaliphatisches C8-C20-Diamin, Diamin mit aromatischem Kern sowie Mischungen respektive Kombinationen davon. Beispiele für lineare oder verzweigte, aliphatische Diamine sind 1,4-Butandiamin, 1,5-Pentandiamin, 2-Methyl-1,5-pentandiamin (MPMD), 1,6-Hexandiamin, 1,7-Heptandiamin, 1,8-Octandiamin (OMDA), 1,9-Nonandiamin (NMDA), 2-Methyl-1,8-octandiamin (MODA), 2,2,4-Trimethylhexamethylendiamin (TMHMD), 2,4,4-Trimethylhexamethylendiamin

(TMHMD), 5-Methyl-1,9-nonandiamin, 1,11-Undecandiamin, 2-Butyl-2-ethyl-1,5-pentandiamin, 1,12-Dodecandiamin, 1,13 Tridecandiamin, 1,14-Tetradecandiamin, 1,16-Hexadecandiamin, und 1,18-Octadecandiamin. Als cycloaliphatische Diamine können beispielsweise Cyclohexandiamin, 1,3-Bis-(aminomethyl)-cyclohexan (BAC), Isophorondiamin, Norbonandiamin, Norbornandimethylamin, Bis(aminomethyl)norbonan, 4,4'-Diaminodicyclohexylmethan (PACM), 2,2-(4,4'-Diaminodicyclohexyl)propan (PACP) und 3,3'-Dimethyl-4,4'-diaminodicyclohexylmethan (MACM) verwendet werden. Als araliphatisches Diamin sei m-Xylylendiamin (MXDA) und p-Xylylendiamin (PXDA) erwähnt. Als weitere Diamine neben MACM werden bevorzugt: 2-Methyl-1,5-pentandiamin, 1,6-Hexandiamin, Trimethylhexamethylendiamin, Methyloctandiamin, Nonandiamin, Decandiamin, Dodecandiamin, m- und/oder p-Xylylendiamin, PACM, Norbornandiamin und 1,3-Bis(aminomethyl)cyclohexan.

Lactam resp. Aminocarbonsäure (Bestandteil(c)):

Lactam respektive Aminocarbonsäure ausgewählt aus der Gruppe: Caprolactam, Laurinlactam, Aminocapronsäure, Aminolaurinsäure, Aminoundecansäure.

Speziell bevorzugte Lactame sind Lactame bzw. α, ω-Aminosäuren mit 4, 6, 7, 8, 11 oder 12 C-Atomen. Dies sind die Lactame Pyrrolidin-2-on (4 C-Atome), ε-Caprolactam (6 C-Atome), Önanthlactam (7 C-Atome), Capryllactam (8 C-Atome), Laurinlactam (12 C-Atome) bzw. die α, ω-Aminosäuren 1,4-Aminobutansäure, 1,6-Aminohexansäure, 1,7-Aminoheptansäure, 1,8-Aminooctansäure, 1,11-Aminoundecansäure und 1,12-Aminododecansäure.

Diol (Bereitstellung von $R_2$):

Diol ausgewählt aus der Gruppe: aliphatisches C2-C36-Diol, cycloaliphatisches C6-C36-Diol, C8-C36-Diol mit aromatischem Kern, ethergruppenhaltiges Diol, Polycaprolacton-Diol, oder Kombinationen davon. Bevorzugt ist das Diol ausgewählt aus der Gruppe: Ethandiol, Propandiol, Butandiol, Pentandiol, Hexandiol, Neopentylglykol, Cyclohexandimethanol, C36-Dimerfettdiol, Polyoxyalkylendiole (lineare oder verzweigte C2-C5-Alkylene) (insbesondere mit einer Molmasse im Bereich von 200-2000 g/mol), Polycaprolacton-Diol mit einer Molmasse im Bereich von 500-3000 g/mol (insbesondere bevorzugt 750-2000 g/mol), sowie Kombinationen davon.

Polyether-Segment (amino- oder carboxylterminiert, Bereitstellung von $R_2$)

Polyoxyethylendiamin, Polyoxyethylendicarbonsäure, Polyoxypropylendiamin, Polyoxypropylendicarbonsäure, Polyoxytetramethylendiamin, Polyoxytetramethylen-dicarbonsäure mit einer zahlenmittleren Molmasse im Bereich von 200 bis 2500 g/mol, deren Copolymere oder Mischungen sowie Copolymere mit den oben aufgeführten Diolen.

Das transparente Polyamid-Elastomer ist, wie bereits erwähnt, bevorzugt ein Polyetheramid oder Polyetheresteramid oder Polyesteramid. Dies insbesondere bevorzugtermassen auf Basis eines Polyamid-Systems ausgewählt aus der Gruppe: MACM12, MACM18, MACM12/PACM12, MACM18/PACM18, Copolyamide unter Einbezug von 6T, 9T, 10T, und/oder 12T Einheiten, respektive Mischungen und/oder Kombinationen davon.

Bevorzugter Polyester- und/oder Esteranteil:

Das transparente Polyamid-Elastomer ist bevorzugt ein Polyesteramid oder ein Polyetherester auf Basis eines Polyester- und/oder Esteranteil mit einem Polyester aus einem C36-Diol und/oder Adipinsäure und/oder Sebazinsäure und/oder C36-Dimerfettsäure und/oder Terephthalsäure.

Die Herstellung der Polyamid-Elastomere erfolgt in einem ein- oder zweistufigen Polykondensationsverfahren. Im einstufigen Verfahren werden die Polyamid bildenden Komponenten zusammen mit der Ester- bzw. Polyester- und/ oder der Polyether-Komponente in möglichst equimolarem Verhältnis der Endgruppen der Einzelkomponenten gemischt und bei Temperaturen im Bereich von 180 bis 300°C bis zum Erreichen der gewünschten Viskosität polykondensiert. Wird ein gezielter blockweiser Aufbau, insbesondere betreffend der Polyamid-Einheit angestrebt, oder werden Lactame als Rohstoff mitverwendet, kommt mit Vorteil das zweistufige Verfahren zum Einsatz. Hierbei werden in einer ersten Stufe zunächst die mit Carboxy- oder Amino-Endgruppen versehenen Polyamid-Einheiten aus den Komponenten a), b) und c) bei Temperaturen von 180 bis 320°C und bei Drücken von 0 bis 20 bar gebildet, die dann nachfolgend mit den Weichsegment-Einheiten unter Atmosphärendruck oder reduziertem Druck (Vakuum) bei Temperaturen im Bereich von 180 bis 280°C zum hochmolekularen Copolymeren polykondensiert werden. Werden Weichsegment-Einheiten mit Hydroxylendgruppen eingesetzt, werden mit Vorteil Veresterungskatalysatoren, wie z.B. organische Titanate oder Zirkonate, zur Reaktionsbeschleunigung eingesetzt.

Des weiteren betrifft die Erfindung Gegenstände aus einem derartigen Polyamid-Elastomer respektive einer dieses wenigstens als wesentlichen Bestandteil enthaltenden Formmasse und gleichermassen entsprechendes Halbzeug wie beispielsweise Granulat etc. So betrifft sie beispielsweise auch einen transparenten (transparent in der Definition wie oben angegeben), bevorzugt trübungsfreien Gegenstand mit wenigstens einem Bereich oder einer Schicht aus einem Polyamid-Elastomer, wie es oben beschrieben wurde.

Ein solcher Gegenstand verfügt bevorzugtermassen mit anderen Worten bei einer Schichtdicke der Schicht aus der Polyamid-Elastomere von 2 mm eine Transmission von mehr als 70%, bevorzugt von mehr als 85%, in Wellenlängenbereich von 500-700 nm aufweist, und/oder einen Haze von höchstens 20%, bevorzugt höchstens 15%, insbesondere bevorzugt höchstens 10%.

Beim Gegenstand kann es sich gemäss verschiedenen Ausführungsformen um eine Folie, ein Profil, ein Rohr, einen Hohlkörper oder einen optisch variablen Filter oder eine optische Linse handeln, bevorzugt um eine ophthalmische Linse insbesondere bevorzugt bei zusätzlicher Anwesenheit eines Farbstoffes, beispielsweise eines photochromen Farbstoffes, um ein Element mit spektraler Filterwirkung wie beispielsweise als Brillenglas, Sonnenlinse, Korrekturlinse, optischer Filter und als Schaltaggregat zur optischen Signalverarbeitung, Skibrille, Visier, Schutzbrille, Fotorecording, Display, optischer Datenspeicher, Fenster von Gebäuden und Fahrzeugen, oder um ein Dekorationselement oder ein Strukturelement wie beispielsweise als Brillenfassung, Spielzeug, Abdeckung, insbesondere als Mobiltelefongehäuse, Teil von elektronischen Geräten, Beschichtung insbesondere von Verpackungen, Dekorationsartikeln, Sportgeräten, Verkleidungen bevorzugt im Automobilbereich.

Zudem betrifft die vorliegende Erfindung ein Verfahren zur Herstellung eines solchen Gegenstandes. Es ist bevorzugtermassen dadurch gekennzeichnet, dass ein Polyamid-Elastomer, wie es oben beschrieben wird, in einem Extrusionsverfahren, einem Spritzgussverfahren oder einem Hinterspritzen zum Gegenstand geformt wird.

Weitere bevorzugte Ausführungsformen sind in den abhängigen Ansprüchen beschrieben.

WEGE ZUR AUSFÜHRUNG DER ERFINDUNG

Die Erfindung soll anfolgend anhand von mehreren Ausführungsbeispielen erläutert werden. Die Beispiele sollen dazu dienen, aufzuzeigen, wie ein Polyamid- Elastomer respektive eine daraus gebildete Formmasse hergestellt und z.B. zu einem Formling verarbeitet werden kann, sie sollen aber nicht dazu ausgelegt werden, den Schutzgegenstand, wie er in den angefügten Patentansprüchen definiert ist, einschränkend auszulegen.
Es wurden sechs Beispiele gemäss der Erfindung (bezeichnet als B1-B6) sowie ein Vergleichsbeispiel (bezeichnet als VB1) in Form eines Polyetheramids ohne Anteil an alkylsubstituiertem Bis(aminocyclohexyl)methan und/oder Bis(aminocyclohexyl) propan synthetisiert und anschliessend deren Materialeigenschaften ausgemessen, und miteinander verglichen.
Die Zusammensetzung sowie die resultierenden Materialeigenschaften sind in der untenstehenden Tabelle zusammengefasst:

Tabelle: Beispiele 1 bis 6 (B1-B6) und Vergleichsbeispiel (VB1)

| **Beispiele / Vergleichsbeispiele** | | **B1** | **B2** | **B3** | **B4** | **B5** | **B6** | **VB1** |
|---|---|---|---|---|---|---|---|---|
| **Zusammensetzung** | | | | | | | | |
| Laurinlactam | Gew.-% | 0.0 | 0.0 | 0.0 | 0.0 | 0.0 | 0.0 | 39.0 |
| Dimersäure C36 | Gew.-% | 0.0 | 0.0 | 0.0 | 0.0 | 0.0 | 0.0 | 14.0 |
| DDS | Gew.-% | 37.0 | 39.9 | 37.7 | 44.7 | 43.7 | 45.9 | 0.0 |
| MACM | Gew.-% | 24.5 | 30.8 | 21.3 | 29.6 | 24.7 | 34.4 | 0.0 |
| Pripol 2033 | Gew.-% | 29.2 | 22.2 | 40.9 | 0.0 | 0.0 | 0.0 | 0.0 |
| Priplast 3197 | Gew.-% | 9.2 | 7.0 | 0.0 | 0.0 | 0.0 | 0.0 | 0.0 |
| Tyzor NPZ | Gew.-% | 0.1 | 0.1 | 0.1 | 0.0 | 0.0 | 0.0 | 0.0 |
| Elastamine RP-2009 | Gew.-% | 0.0 | 0.0 | 0.0 | 0.0 | 0.0 | 0.0 | 47.0 |
| Elastamine RP-409 | Gew.-% | 0.0 | 0.0 | 0.0 | 25.7 | 31.6 | 18.7 | 0.0 |

(fortgesetzt)

| **Eigenschaften** | | | | | | | | |
|---|---|---|---|---|---|---|---|---|
| Zahlenmittlere Molmasse (theoret.) PA-Segment | g/mol | 1000 | 1500 | 750 | 1000 | 750 | 1500 | 2100 |
| Rel. Viskosität | | 1.43 | 1.49 | 1.37 | 1.41 | 1.46 | 1.48 | 1.68 |
| COOH | mmol/kg | 5 | 34 | 10 | 80 | 90 | 93 | 2 |
| $NH_2$ | mmol/kg | 11 | 11 | 5 | 10 | 12 | 14 | 60 |
| Tg (PA-Hartsegment) | °C | 75 | 85 | 83 | 82 | 78 | 92 | 26 |
| Tm | °C | 194 | 202 | 195 | 190 | 173 | 206 | 162 |
| Hm | J/g | 6 | 13 | 9 | 13 | 8 | 15 | 30 |
| Zug-E-Modul | MPa | 230 | 240 | 100 | 950 | 120 | 1300 | 90 |
| Reissfestigkeit | MPa | 23 | 25 | 24 | 29 | 28 | 34 | 15 |
| Reissdehnung | % | 280 | 280 | 400 | 250 | 330 | 130 | 600 |
| Schlagzähigkeit 23°C | $kJ/m^2$ | o.B. | o.B. | o.B. | o.B. | o.B. | 25 | o.B. |
| Schlagzähigkeit -30°C | $kJ/m^2$ | o.B. | o.B. | o.B. | o.B. | o.B. | 50 | o.B. |
| Kerbschlagzähigkeit 23°C | $kJ/m^2$ | o.B. | o.B. | o.B. | o.B. | o.B. | 8 | o.B. |
| Kerbschlagzähigkeit -30°C | $kJ/m^2$ | 40 | 39 | 90 | 75 | 80 | 1.6 | o.B. |
| Transmission bei 600 nm | % | 85 | 88 | 85 | 82 | 84 | 81 | 79 |
| Haze | % | 3.4 | 2.4 | 2.6 | 5.1 | 8.6 | 4.5 | 60 |

Dabei werden folgende Materialien eingesetzt:

| | |
|---|---|
| DDS | Dodekandisäure |
| MACM | Bis-(4-amino-3-methyl-cyclohexyl)-methan |
| Pripol 2033 | ist ein C36-Diol (CAS-Nr. 147853-32-5), erhältlich von Uniqema |
| Priplast3197 | ist ein Dimerdioldimerat (CAS-Nr. 177591-08-1), hergestellt aus Dimerdiol, wie z.B. Pripol 2033, und der C36- Dimerfettsäure, erhältlich von Uniqema |
| Tyzor NPZ | Tetra-(n-propyl)-zirkonat, erhältlich von Dupont. |
| Elastamine | RP-409 ist ein Polyoxypropylendiamin mit einem Molekulargewicht von circa 440 g/mol und ist erhältlich von Huntsman. |
| Elastamine | RP-2009 ist ein Polyoxypropylendiamin mit einem Molekulargewicht von circa 1980 g/mol und ist erhältlich von Huntsman. |

Die Ausgangsmaterialien wurden unter Vorlegung der oben angegebenen Materialien in einem Rührkessel wie folgt hergestellt:

In einer ersten Stufe wird zunächst das Polyamid-Hartsegment polykondensiert. Dazu werden die polyamidbildenden Monomere (MACM, Dodekandisäure, etc.) und Antischaum in den Reaktor vorgelegt und mit Stickstoff inertisiert. Der Reaktor wird anschliessend auf 270°C aufgeheizt und die Reaktionsmischung für 4 Stunden unter Stickstoffbeschleierung (Baroentgasung) bei einer Produkttemperatur von 260°C gerührt.

Bei den Beispielen B1 bis B3 werden in einer zweiten Stufe die carboxylterminierten Polyamid-Hartsegmente mit Diolen und/oder hydroxylterminierten Polyestern umgesetzt. Hierzu wird eine Mischung bestehend aus Diol, Polyester und Veresterungskatalysator zur Schmelze der Polyamid-Hartsegmente (Produkttemperatur: 230 - 260°C) hinzugesetzt.

Bei den Beispielen B4 bis B6 werden in einer zweiten Stufe das caboxylterminierte Polyamid-Hartsegment mit dem Polyetherdiamin umgesetzt. Hierzu wird das auf 150°C vorgewärmte Polyetherdiamin, gegebenenfalls zusammen mit Stabilisatoren und Kondensationsbeschleunigern, zur Schmelze der Polyamid-Hartsegmente, die eine Produkttemperatur von 230 bis 260°C aufweist, hinzugesetzt.

Dann wird der Druck im Reaktor innerhalb von 60 Minuten auf 200 mbar reduziert. Nachdem die Reaktionsmischung 30 Minuten bei diesem Druck gerührt wurde, wird der Druck innerhalb von 60 Minuten bis zu einem Enddruck von kleiner 20 mbar gesenkt. Sobald das gewünschte Drehmoment erreicht wird, wird das Vakuum gebrochen, die Polymerschmelze mit Stickstoff von 5 bar beaufschlagt und durch Düsen in ein Wasserbad ausgetragen. Die abgezogenen Stränge werden granuliert und das Granulat 24h bei 80°C getrocknet.

Die zahlenmittlere Molmasse der Polyamidsegmente wurde anhand nachfolgender Gleichung bestimmt:

$$m_R = \frac{(m - m_{H_2O}) * M_R}{M_n - M_R}$$

$$M_n = \frac{(m - m_{H_2O}) * M_R}{m_R} + M_R$$

$m_R$ = Menge an Regler in g
m = Menge an Polyamid-bildenden Monomeren in g
$m_{H2O}$ = Menge an entstehenden Wasser in g
$M_R$ = Molmasse Regler in g/mol
$M_n$ = theoretische Blocklänge in g/mol

Die relative Viskosität ($\eta_{rel}$) wurde bestimmt nach DIN EN ISO 307, in 0.5 Gew.-%iger m-Kresollösung bei einer Temperatur von 20°C.
Die Glasumwandlungstemperatur (Tg), der Schmelzpunkt (Tm) und die Schmelzwärme (Hm) wurden bestimmt nach ISO 11357-1/2. Die Differential scanning calorimetry (DSC) wurde mit einer Aufheizrate von 20K/min durchgeführt.
Der Haze und die Transmission wurden bei 23°C mit einem Haze-Gard Plus der Firma Byk-Gardener nach ASTM D-1003 (Lichtart C) an Rundplatten 70x2 mm bestimmt.
Der Zug-E-Modul wurde nach ISO 527 mit einer Zuggeschwindigkeit von 1 mm/min, Reissfestigkeit und Reissdehnung nach ISO 527 mit einer Zuggeschwindigkeit von 50 mm/min am ISO-Zugstab , Norm: ISO/CD 3167, Typ A1, 170 x 20/10 x 4 mm bei Temperatur 23 °C bestimmt.
Schlagzähigkeit und Kerbschlagzähigkeit nach Charpy wurden nach ISO 179 am ISO-Prüfstab, Norm: ISO/CD 3167, Typ B1, 80 x 10 x 4 mm bei Temperatur 23 °C gemessen.
Die Amino- und Carboxyl-Endgruppenkonzentrationen werden mittels einer potentiometrischen Titration bestimmt. Für die Amino-Endgruppen werden hierzu 0.2 - 1.0 g Polyamid bzw. Polyamid-Oligomer in einem Gemisch aus 50 ml m-Kresol und 25 ml Isopropanol bei 50 - 90°C gelöst und nach Zusatz von Aminocapronsäure mit einer 0.05 molaren Perchlorsäurelösung titriert. Zur Bestimmung der COOH-Endgruppen werden 0.2 bis 1.0 g der zu bestimmenden Probe je nach Löslichkeit in Benzylalkohol oder einem Gemisch aus o-Kresol und Benzylalkohol bei 100°C gelöst und nach Zugabe von Benzoesäure mit einer 0.1 molaren Tetra-n-butylammoniumhydroxidlösung titriert.

**Patentansprüche**

1. Transparentes Polyamid-Elastomer der Struktur

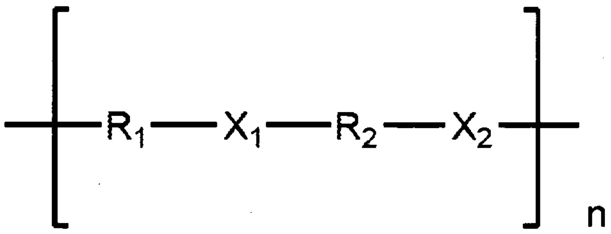

(1)

wobei $R_1$ ein Polyamid-Segment ist, gebildet aus

(a) 10 - 100 mol-% alkylsubstituiertem Bis(aminocyclohexyl)methan und/oder Bis(aminocyclohexyl)propan und

0 - 90 mol-% anderen cycloaliphatischen C6-C36 Diaminen und/oder aliphatischen C2-C36 Diaminen und/oder aromatischen C6-C36 Diaminen,
wobei die Konzentrationsangaben bezogen sind auf die Gesamtmenge Diamin im Polyamid-Segment, und

(b) aliphatischen C4-C36-Dicarbonsäuren und/oder cycloaliphatischen C8-C36-Dicarbonsäuren und/oder aromatischen C8-C36-Dicarbonsäuren und
(c) gegebenenfalls Lactamen und/oder Aminocarbonsäuren C6-C12 ist,

wobei $R_2$ ausgewählt ist aus der Gruppe der bivalenten Reste: lineares oder verzweigtes C2-C5 Polyoxyalkylen, Polyolefin, Polysiloxan mit zahlenmittlerer Molmasse im Bereich von 200 - 3000 g/mol, lineares oder verzweigtes, substituiertes oder unsubstituiertes C2-C36-Alkylen, C6-C36-Cycloalkylen, C6-C20-Aryl, Polycaprolacton, Polyester auf Basis aliphatischer oder cycloaliphatischer Dicarbonsäuren und Diolen, aliphatisches Polycarbonat, sowie Copolymere oder Mischungen dieser Elemente,
und wobei $X_1$ und $X_2$ unabhängig voneinander Amid- (CONH) oder Ester-(COO) Bindungen sind,
und wobei das transparente Polyamid-Elastomer eine durch das das Element $R_2$ enthaltende Segment herrührende amorphe Phase aufweist, deren Glasübergangstemperatur höchstens 20°C beträgt.

**2.** Polyamid-Elastomer nach Anspruch 1, wobei $R_1$ im Bereich von 40-95 Gew.-% ausmacht und $R_2$ im Bereich von 5 - 60 Gew.-% ausmacht, wobei bevorzugt ist, wenn 50 bis 85 Gew.-% $R_1$ und 15 bis 50 Gew.-% $R_2$ vorliegen.

**3.** Polyamid-Elastomer nach einem der vorhergehenden Ansprüche, wobei das Polyamid-Segment $R_1$ zu wenigstens 20 mol-%, bevorzugt zumindestens 30 mol-%, insbesondere bevorzugt zumindestens 40 mol-% auf alkylsubstituiertem Bis(aminocyclohexyl)methan beruht.

**4.** Polyamid-Elastomer nach einem der vorhergehenden Ansprüche 1-2, wobei das Polyamid-Segment $R_1$ vollständig auf alkylsubstituiertem Bis(aminocyclohexyl)methan beruht.

**5.** Polyamid-Elastomer nach einem der vorhergehenden Ansprüche, wobei es sich beim alkylsubstituiertem Bis(aminocyclohexyl)methan um Bis-(4-amino-3-methyl-cyclohexyl)-methan (MACM) handelt.

**6.** Polyamid-Elastomer nach einem der vorhergehenden Ansprüche, wobei das Polyamid-Segment $R_1$ eine zahlenmittlere Molmasse im Bereich von 500-5000 g/mol, bevorzugt im Bereich von 700-4000 g/mol, und insbesondere bevorzugt im Bereich von 750-3000 g/mol aufweist.

**7.** Polyamid-Elastomer nach einem der vorhergehenden Ansprüche, **dadurch gekennzeichnet, dass** $X_1$=X2=(COO), und dass der Rest $R_2$ gegeben ist als lineares oder verzweigtes, substituiertes oder unsubstituiertes C2-C36-Alkylen, C6-C36-Cycloalkylen, C6-C20-Aryl, Polycaprolacton, Polyester auf Basis aliphatischer oder cycloaliphatischer Dicarbonsäuren und Diolen, aliphatisches Polycarbonat, C2-C4 Polyoxyalkylen sowie Copolymere und Mischungen dieser Elemente.

**8.** Polyamid-Elastomer nach einem der vorhergehenden Ansprüche, **dadurch gekennzeichnet, dass** $X_1$=X2=(CONH), und dass der Rest $R_2$ gegeben ist C2-C4 Polyoxyalkylen, Polyolefin, Polysiloxan mit zahlenmittlerer Molmasse im Bereich von 200 - 3000 g/mol (bevorzugt 300-2500 g/mol) sowie Copolymere und Mischungen dieser Elemente.

**9.** Polyamid-Elastomer nach einem der vorhergehenden Ansprüche, **gekennzeichnet durch** eine bevorzugt **durch** das das Element $R_2$ enthaltende Segment herrührende amorphe Phase aufweist, deren Glasübergangstemperatur weniger als 0°C, insbesondere bevorzugt weniger als -20°C beträgt.

**10.** Polyamid-Elastomer nach einem der vorhergehenden Ansprüche, **gekennzeichnet durch** eine Transmission von wenigstens 70%, bevorzugt von wenigstens 80%, insbesondere bevorzugt von mehr als 85%.

**11.** Polyamid-Elastomer nach einem der vorhergehenden Ansprüche, **gekennzeichnet durch** einen Haze von höchstens 20%, bevorzugt höchstens 15%, insbesondere bevorzugt höchstens 10%.

**12.** Polyamid-Elastomer nach einem der vorhergehenden Ansprüche, **dadurch gekennzeichnet, dass** das Polyamid-Segment $R_1$ und das das Element $R_2$ enthaltende Segment statistisch, alternierend oder blockweise angeordnet sind.

**13.** Polyamid-Elastomer nach einem der vorhergehenden Ansprüche, wobei das Polyamid-Segment $R_1$ ein mikrokristallines Polyamid-Hartsegment respektive Copolyamid-Hartsegment ist, wobei dieses bevorzugtermassen eine Schmelzenthalpie im Bereich von 4-40 J/g, bevorzugt im Bereich von 4-25 J/g aufweist und/oder wobei dieses bevorzugtermassen eine Glasübergangstemperatur oberhalb von wenigstens 50°C, bevorzugt von mehr als 80°C, und insbesondere bevorzugt von mehr als 100°C verfügt, und/oder wobei dieses über eine Schmelztemperatur von wenigstens 120°C, bevorzugt von wenigstens 135°C, und insbesondere von wenigstens 150°C aufweist.

**14.** Polyamid-Elastomer nach einem der vorhergehenden Ansprüche, **dadurch gekennzeichnet, dass** $R_1$ aufgebaut ist aus Bis-(4-amino-3-methyl-cyclohexyl)-methan (MACM) und wenigstens einer aliphatischen Dicarbonsäure mit 10-36 Kohlenstoffatomen, und wobei es sich bevorzugtermassen beim zusätzlich vorhandenen anderen cycloaliphatischen Diamin um Bis-(4-aminocyclohexyl)-methan (PACM) und/oder Isophorondiamin (IPD) mit oder ohne Substitution handelt.

**15.** Polyamid-Elastomer nach einem der vorhergehenden Ansprüche, **dadurch gekennzeichnet, dass** $R_1$ aufgebaut ist aus Bis-(4-amino-3-methyl-cyclohexyl)-methan (MACM) und Bis-(4-aminocyclohexyl)-methan (PACM) in Kombination mit einer aliphatischer Dicarbonsäure mit 10-36 Kohlenstoffatomen, bevorzugt mit 12 Kohlenstoffatomen, wobei insbesondere bevorzugt die Konzentration an Bis-(4-aminocyclohexyl)-methan (PACM) grösser als 40 mol. % ist, besonders bevorzugt grösser als 55 mol.-% ist.

**16.** Polyamid-Elastomer nach einem der Ansprüche 1-12, **dadurch gekennzeichnet, dass** das Polyamid-Segment $R_1$ eine amorphes Polyamid-Hartsegment respektive Copolyamid-Hartsegment ist, wobei dieses eine Schmelzenthalpie im Bereich von weniger als 4 J/g aufweist, und/oder wobei dieses eine Glasübergangstemperatur von wenigstens 50°C, bevorzugt von mehr als 80°C und insbesondere bevorzugt von mehr als 100°C aufweist.

**17.** Polyamid-Elastomer nach Anspruch 16, **dadurch gekennzeichnet, dass** das Polyamid-Segment $R_1$ auf Basis von Bis-(4-amino-3-methyl-cyclohexyl)-methan (MACM) und Isophthalsäure und/oder Terephthalsäure und/oder einer aliphatischen C4-C36, bevorzugt einer C12-Dicarbonsäure und/oder cycloaliphatischen C8-C36-Dicarbonsäure ist.

**18.** Polyamid-Elastomer nach einem der Ansprüche 16 oder 17, **dadurch gekennzeichnet, dass** es sich beim Polyamid-Segment $R_1$ um MACMI, MACMI/MACMT, MACMI/MACMT/12, MACMI/12, MACMT/12 handelt, wobei der Gehalt an Laurinlacam bevorzugt kleiner als 50 mol-%, insbesondere bevorzugt kleiner als 35 mol-% ist.

**19.** Polyamid-Elastomer nach einem der vorhergehenden Ansprüche, **dadurch gekennzeichnet, dass** das Polyamid-Segment $R_1$ ein Polyamid-Hartsegment basierend auf aromatischen Dicarbonsäuren mit 10 bis 18 Kohlenstoffatomen und/oder aliphatischen Dicarbonsäuren mit 6 bis 36 C-Atomen oder eine Mischung solcher Homopolyamide und/oder Copolyamide ist, wobei es bevorzugtermassen ein Polyamid ist ausgewählt aus der Gruppe: 61/MACMI/MACMT, 6116T/MACMI, MACMI/MACM36, MACM6-18, MACM6-18/PACM6-18, lactamhaltige Polyamide wie 12/MACMI, 12/MACMT, 12/MACM6-18 oder eine Mischung davon.

**20.** Polyamid-Elastomer nach einem der vorhergehenden Ansprüche, **dadurch gekennzeichnet, dass** es sich beim Polyamid-Segment $R_1$ um ein Copolyamid-Hartsegment auf Basis wenigstens einer Dicarbonsäure und alkylsubsituiertem Bis(aminocyclohexyl)methan und einem Diamin mit einem aromatischen Kern handelt, bevorzugt auf

Basis von MACM und MXD, wobei die Dicarbonsäure aromatisch und/oder aliphatisch sein kann, und wobei es sich bevorzugt um MACMI/MXDI, MACMI/MXD6 oder MACMI/6I/MXDI, MACMI/6I/MXD6 handelt.

**21.** Polyamid-Elastomer nach einem der vorhergehenden Ansprüche, **dadurch gekennzeichnet, dass** es eine Lösungsviskosität ($\eta_{rel}$), gemessen in m-Kresol als 0.5 Gew.-%-Lösung, bei einer Temperatur von 20°C, zwischen 1.3 und 3.0, insbesondere bevorzugt zwischen 1.4 und 2.5, aufweist und/oder dass es einen Zug-E-Modul von weniger als 1500 MPa, bevorzugt von weniger als 1000 MPa, insbesondere bevorzugt von weniger als 500 MPa aufweist.

**22.** Polyamid-Elastomer nach einem der vorhergehenden Ansprüche, **dadurch gekennzeichnet, dass** die Dicarbonsäuren von Polyamid-Segment $R_1$ und/oder $R_2$ ausgewählt sind aus der folgenden Gruppe: aliphatische C4-C44-Disäure, cycloaliphatische C8-C36-Disäure, aromatische Disäure, bevorzugtermassen TPS, IPS, NDS, sowie Mischungen respektive Kombinationen davon, wobei sie bevorzugtermassen ausgewählt sind aus der Gruppe: Adipinsäure, Sebazinsäure, Dodekandisäure, Terephthalsäure, Isophthalsäure, Cyclohexandicarbonsäure und Mischungen davon, Bernsteinsäure, Glutarsäure, Adipinsäure, Pimelinsäure, Korksäure, Azelainsäure, Sebazinsäure, Undecandisäure, Dodecandisäure, Brassylsäure, Tetradecandisäure, Pentadecandisäure, Hexadecandisäure, Heptadecandisäure, Octadecandisäure, Nonadecandisäure, Eicosandisäure, Japansäure, Cyclohexandicarbonsäure, Dimerfettsäure mit 36 oder 44 C-Atomen, Isophthalsäure, Terephthalsäure, Naphthalindicarbonsäure.

**23.** Polyamid-Elastomer nach einem der vorhergehenden Ansprüche, **dadurch gekennzeichnet, dass** das andere Diamin des Polyamid-Segments ausgewählt ist aus der folgenden Gruppe: Verzweigtes oder unverzweigtes aliphatisches C4-C18-Diamin, cycloaliphatisches C8-C20-Diamin, Diamin mit aromatischem Kern, bevorzugtermassen MXDA, PXDA, Methylpentandiamin, Hexandiamin, Trimethylhexamethylendiamin, Methyloktandiamin, Nonandiamin, Dekandiamin, Dodekandiamin, PACM, Norbornandiamin, 1,3-Bis(aminomethyl)cyclohexan sowie Mischungen respektive Kombinationen davon.

**24.** Polyamid-Elastomer nach einem der vorhergehenden Ansprüche, **dadurch gekennzeichnet, dass** die Komponente (c) ausgewählt ist aus der Gruppe: Caprolactam, Laurinlactam, Aminocapronsäure, Aminolaurinsäure, Aminoundecansäure, $\alpha$, $\omega$-Aminosäuren mit 4, 6, 7, 8, 11 oder 12 C-Atomen wie Pyrrolidin-2-on, $\varepsilon$-Caprolactam, Önantholactam, Capryllactam, Laurinlactam, $\alpha$, $\omega$-Aminosäuren 1,4-Aminobutansäure, 1,6-Aminohexansäure, 1,7-Aminoheptansäure, 1,8-Aminooctansäure, 1,11-Aminoundecansäure und 1,12-Aminododecansäure.

**25.** Polyamid-Elastomer nach einem der vorhergehenden Ansprüche, **dadurch gekennzeichnet, dass** $R_2$ auf Basis eines Diols bereitgestellt wird ausgewählt aus der Gruppe: aliphatisches C2-C36-Diol, cycloaliphatisches C6-C36-Diol, C8-C36-Diol mit aromatischem Kern, ethergruppenhaltiges Diol, Polycaprolacton-Diol, oder Kombinationen davon, insbesondere bevorzugt ausgewählt aus der Gruppe: Ethandiol, Propandiol, Butandiol, Hexandiol, Cyclohexandimethanol, C36-Dimerfettdiol, C2-C4 Polyoxyalkylendiole, insbesondere mit einer Molmasse im Bereich von 200-2000 g/mol, Polycaprolacton-Diol mit einer Molmasse im Bereich von 500-3000 g/mol, insbesondere bevorzugt 750-2000 g/mol), sowie Kombinationen davon.

**26.** Polyamid-Elastomer nach einem der vorhergehenden Ansprüche, **dadurch gekennzeichnet, dass** $R_2$ auf Basis eines Polyethersegmentes bereitgestellt wird ausgewählt aus der Gruppe: Polyoxyethylendiamin, Polyoxyethylendicarbonsäure, Polyoxypropylendiamin, Polyoxypropylendicarbonsäure, Polyoxytetramethylendiamin, Polyoxytetramethylen-dicarbonsäure mit einer zahlenmittleren Molmasse im Bereich von 200 bis 2500 g/mol, deren Copolymere oder Mischungen sowie Copolymere mit Neopentylglykol.

**27.** Polyamid-Elastomer nach einem der vorhergehenden Ansprüche, **dadurch gekennzeichnet, dass** es sich um ein Polyetheramid, ein Polyesteramid oder ein Polyetheresteramid handelt auf Basis eines Polyamid-Systems ausgewählt aus der Gruppe: MACM12, MACM18, MACM12/PACM12, MACM18/PACM18, Copolyamide unter Einbezug von 6T, 9T, 10T, und/oder 12T Einheiten, respektive Mischungen und/oder Kombinationen davon.

**28.** Polyamid-Elastomer nach einem der vorhergehenden Ansprüche, **dadurch gekennzeichnet, dass** es sich um ein Polyetheramid, ein Polyesteramid oder ein Polyetheresteramid handelt mit einem Polyester- und/oder Esteranteil aus einem C36-Diol und/oder Adipinsäure und/oder Sebazinsäure und/oder C36-Dimerfettsäure und/oder Terephthalsäure.

**29.** Polyamid-Elastomer nach einem der vorhergehenden Ansprüche, **dadurch gekennzeichnet, dass** es zusätzlich Farbstoffe und/oder Additive enthält, wobei es sich beim Farbstoff um einen photochromen Farbstoff handeln kann, welcher reversibel mit UV oder kurzwelligem VIS anregbar ist, bevorzugtermassen um einen Farbstoff auf Basis

von Spirooxaazinen, und/oder wobei es sich bei den Additiven um Stabilisatoren wie UV-Stabilisatoren, Hitzestabilisatoren, Radikalfänger und/oder um Verarbeitungshilfsstoffe, Weichmacher, weitere Polymere und/oder um funktionelle Additive bevorzugt zur Beeinflussung optischer Eigenschaften wie insbesondere des Brechungsindexes oder um Kombinationen oder Mischungen davon handelt.

**30.** Transparenter, bevorzugt trübungsfreier Gegenstand mit wenigstens einem Bereich oder einer Schicht aus einem Polyamid-Elastomer nach einem der vorhergehenden Ansprüche.

**31.** Gegenstand nach dem vorhergehenden Anspruch für hochwertige optische Anwendungen, **dadurch gekennzeichnet, dass** er bei einer Schichtdicke der Schicht aus der Polyamid-Elastomere von 2 mm eine Transmission von mehr als 70%, bevorzugt von mehr als 85%, in Wellenlängenbereich von 500-700 nm aufweist, und/oder einen Haze von höchstens 20%, bevorzugt höchstens 15%, insbesondere bevorzugt höchstens 10%.

**32.** Gegenstand nach Anspruch 30 oder 31, **dadurch gekennzeichnet, dass** es sich um eine Folie, ein Profil, ein Rohr, einen Hohlkörper oder einen optisch variablen Filter oder eine optische Linse handelt, bevorzugt um eine ophthalmische Linse insbesondere bevorzugt um ein Element mit spektraler Filterwirkung wie beispielsweise als Brillenglas, Sonnenlinse, Korrekturlinse, optischer Filter und als Schaltaggregat zur optischen Signalverarbeitung, Skibrille, Visier, Schutzbrille, Fotorecording, Display, optischer Datenspeicher, Fenster von Gebäuden und Fahrzeugen, oder um ein Dekorationselement oder ein Strukturelement wie beispielsweise als Brillenfassung, Spielzeug, Abdeckung, insbesondere als Mobiltelefongehäuse, Teil von elektronischen Geräten, Beschichtung insbesondere von Verpackungen, Dekorationsartikeln, Sportgeräten, Verkleidungen bevorzugt im Automobilbereich.

**33.** Verfahren zur Herstellung eines Gegenstandes nach einem der Ansprüche 30-32, **dadurch gekennzeichnet, dass** ein Polyamid-Elastomer nach einem der Ansprüche 1 - 29 in einem Extrusionsverfahren, einem Spritzgussverfahren oder einem Hinterspritzen zum Gegenstand geformt wird.

**34.** Verfahren zur Herstellung eines Polyamid-Elastomeren nach einem der Ansprüche 1 - 29, **dadurch gekennzeichnet, dass** in einem einstufigen Verfahren werden die Polyamid bildenden Komponenten zusammen mit der Ester- bzw. Polyester- und/oder der Polyether-Komponente in bevorzugt equimolarem Verhältnis der Endgruppen der Einzelkomponenten gemischt und bei Temperaturen bevorzugt im Bereich von 180 bis 300°C bis zum Erreichen der gewünschten Viskosität polykondensiert werden.

**35.** Verfahren zur Herstellung eines Polyamid-Elastomeren nach einem der Ansprüche 1 - 29, **dadurch gekennzeichnet, dass**, insbesondere für einen gezielt blockweisen Aufbau, insbesondere betreffend der Polyamid-Einheit, oder bei Verwendung von Lactamen als Rohstoff, in einem zweistufigen in einer ersten Stufe zunächst die mit Carboxy- oder Amino-Endgruppen versehenen Polyamid-Einheiten aus den Komponenten a), b) und c) bei Temperaturen von bevorzugt 180 bis 320°C und bei Drücken von bevorzugt 0 bis 20 bar, gebildet werden, die dann nachfolgend in der zweiten Stufe mit den Weichsegment-Einheiten unter Atmosphärendruck oder reduziertem Druck, insbesondere Vakuum, bei Temperaturen bevorzugt im Bereich von 180 bis 280°C zum hochmolekularen Copolymeren polykondensiert werden.

## Claims

**1.** A transparent polyamide elastomer of the following structure

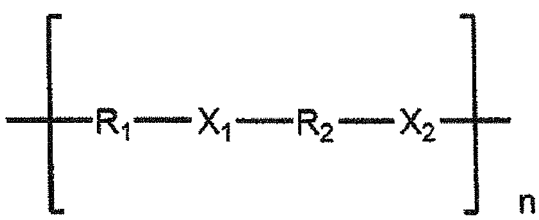

(1)

where $R_1$ is a polyamide segment, formed from

a) from 10 to 100 mol% of alkyl-substituted bis(aminocyclohexyl)methane and/or bis(aminocyclohexyl)propane and
from 0 to 90 mol% of other cycloaliphatic C6-C36 diamines and/or aliphatic C2-C36 diamines and/or aromatic C6-C36 diamines,
where these concentration values are based on the total amount of diamine in the polyamide segment, and
b) aliphatic C4-C36 dicarboxylic acids and/or cycloaliphatic C8-C36 dicarboxylic acids and/or aromatic C8-C36 dicarboxylic acids and
c) if appropriate lactones and/or aminocarboxylic acids C6-C12,

where $R_2$ is selected from the group of the following bivalent moieties: linear or branched C2-C5-polyoxyalkylene, polyolefin, polysiloxane with number-average molar weight in the range from 200 to 3000 g/mol, linear or branched, substituted or unsubstituted C2-C36-alkylene, C6-C36-cycloalkylene, C6-C20-aryl, polycaprolactone, polyester based on aliphatic or cycloaliphatic dicarboxylic acids and diols, aliphatic polycarbonate, and also copolymers or a mixture of these elements,
and where $X_1$ and $X_2$, independently of one another, are amide bonding systems (CONH) or ester bonding systems (COO,
and where the transparent polyamide elastomer shows an amorphous elastomer, originated by the element $R_2$ comprising segment, whose glass transition temperature is 20°C at most.

**2.** The polyamide elastomer as claimed in claim 1, wherein $R_1$ accounts for an amount in the range from 40 to 95% by weight and $R_2$ accounts for an amount in the range from 5 to 60% by weight, preferred amounts present here being from 50 to 85% by weight of $R_1$ and from 15 to 50% by weight of $R_2$.

**3.** The polyamide elastomer as claimed in any of the preceding claims, wherein at least 20 mol%, preferably at least 30 mol%, particularly preferably at least 40 mol%, of the polyamide segment $R_1$ is based on alkyl-substituted bis (aminocyclohexyl)methane.

**4.** The polyamide elastomer as claimed in any of the preceding claims 1-2, wherein the polyamide segment $R_1$ is based entirely on alkyl-substituted bis(aminocyclohexyl)methane.

**5.** The polyamide elastomer as claimed in any of the preceding claims, wherein the alkyl-substituted bis(aminocyclohexyl)methane is bis(4-amino-3-methylcyclohexyl)methane (MACM).

**6.** The polyamide elastomer as claimed in any of the preceding claims, wherein the number-average molar weight of the polyamide segment $R_1$ is in the range from 500 to 5000 g/mol, preferably in the range from 700 to 4000 g/mol, and particularly preferably in the range from 750 to 3000 g/mol.

**7.** The polyamide elastomer as claimed in any of the preceding claims, **characterized in that** $X_1 = X_2 =$ (COO), and **in that** the moiety $R_2$ is defined as linear or branched, substituted or unsubstituted C2-C36-alkylene, C6-C36-cycloalkylene, C6-C20-aryl, polycaprolactone, polyester based on aliphatic or cycloaliphatic dicarboxylic acids and diols, aliphatic polycarbonate, C2-C4-polyoxyalkylene and also copolymers and mixtures of these elements.

**8.** The polyamide elastomer as claimed in any of the preceding claims, **characterized in that** $X_1 = X_2 =$ (CONH), and **in that** the moiety $R_2$ is defined as C2-C4-polyoxyalkylene, polyolefin, polysiloxane with a number-average molar weight in the range from 200 to 3000 g/mol, preferably from 300 to 2500 g/mol, or else a copolymer or a mixture of these elements.

**9.** The polyamide elastomer as claimed in any of the preceding claims, **characterized by** an amorphous phase preferably deriving from the segment containing the element $R_2$, where the glass transition temperature of this phase is less than 0°C, particularly preferably below -20°C.

**10.** The polyamide elastomer as claimed in any of the preceding claims, **characterized by** a transmittance of at least 70%, preferably of at least 80%, particularly preferably of more than 85%.

**11.** The polyamide elastomer as claimed in any of the preceding claims, **characterized by** a haze of at most 20%, preferably of at most 15%, particularly preferably of at most 10%.

**12.** The polyamide elastomer as claimed in any of the preceding claims, **characterized in that** the polyamide segment $R_1$ and the segment containing the element $R_2$ have a statistical, alternating or blockwise arrangement.

**13.** The polyamide elastomer as claimed in any of the preceding claims, where the polyamide segment ($R_1$) is a microcrystalline hard polyamide segment or, respectively, hard copolyamide segment, preferably with enthalpy of fusion in the range from 4 to 40 J/g, preferably in the range from 4 to 25 J/g, and/or preferably with a glass transition temperature above at least 50°C, preferably above 80°C, and particularly preferably above 100°C, and/or preferably with a melting point of at least 120°C, preferably at least 135°C, and particularly at least 150°C.

**14.** The polyamide elastomer as claimed in any of the preceding claims, **characterized in that** $R_1$ is composed of bis (4-amino-3-methylcyclohexyl)methane (MACM) and of at least one aliphatic dicarboxylic acid having from 10 to 36 carbon atoms, and where the additional other cycloaliphatic diamine present is preferably bis(4-aminocyclohexyl) methane (PACM) and/or isophoronediamine (IPD), having or not having substitution.

**15.** The polyamide elastomer as claimed in any of the preceding claims, **characterized in that** $R_1$ is composed of bis (4-amino-3-methylcyclohexyl)methane (MACM) and bis(4-aminocyclohexyl)methane (PACM) in combination with an aliphatic dicarboxylic acid having from 10 to 36 carbon atoms, preferably having 12 carbon atoms, where the concentration of bis(4-aminocyclohexyl)methane (PACM) is particularly preferably greater than 40 mol%, with particular preference greater than 55 mol%.

**16.** The polyamide elastomer as claimed in any of claims 1 to 12, **characterized in that** the polyamide segment $R_1$ is an amorphous hard polyamide segment or, respectively, hard copolyamide segment, with enthalpy of fusion in the range below 4 J/g, and/or with a glass transition temperature of at least 50°C, preferably more than 80°C, and particularly preferably more than 100°C.

**17.** The polyamide elastomer as claimed in claim 16, **characterized in that** the polyamide segment $R_1$ is based on bis (4-amino-3-methylcyclohexyl)methane (MACM) and isophthalic acid and/or terephthalic acid and/or on an aliphatic C4-C36, preferably C12 dicarboxylic acid and/or on a cycloaliphatic C8-C36 dicarboxylic acid.

**18.** The polyamide elastomer as claimed in claim 16 or 17, **characterized in that** the polyamide segment $R_1$ is MACMI, MACMI/MACMT, MACMI/MACMT/12, MACMI/12, MACMT/12, where the content of laurolactam is preferably smaller than 50 mol%, particularly preferably smaller than 35 mol%.

**19.** The polyamide elastomer as claimed in any of the preceding claims, **characterized in that** the polyamide segment $R_1$ is a hard polyamide segment based on aromatic dicarboxylic acids having from 10 to 18 carbon atoms and/or on aliphatic dicarboxylic acids having from 6 to 36 carbon atoms, or is a mixture of such homopolyamides and/or copolyamides, preferably being a polyamide selected from the following group: 6I/MACMI/MACMT, 6I/6T/MACMI, MACMI/MACM36, MACM6-18, MACM6-18/PACM6-18, lactam-containing polyamides, such as 12/MACMI, 12/MACMT, 12/MACM6-18 or a mixture thereof.

**20.** The polyamide elastomer as claimed in any of the preceding claims, **characterized in that** the polyamide segment $R_1$ is a hard copolyamide segment based on at least one dicarboxylic acid and on alkyl-substituted bis(aminocyclohexyl)methane and on a diamine having an aromatic ring, preferably based on MACM and MXD, where the dicarboxylic acid can be aromatic and/or aliphatic, preferably MACMI/MXDI, MACMI/MXD6 or MACMI/6I/MXDI, MACMI/6I/MXD6.

**21.** The polyamide elastomer as claimed in any of the preceding claims, **characterized in that** its solution viscosity ($\eta_{rel}$), measured in m-cresol in the form of 0.5% strength by weight solution, at a temperature of 20°C, is from 1.3 to 3.0, particularly preferably from 1.4 to 2.5, and/or its tensile modulus of elasticity is less than 1500 MPa, preferably less than 1000 MPa, particularly preferably less than 500 MPa.

**22.** The polyamide elastomer as claimed in any of the preceding claims, **characterized in that** the dicarboxylic acids of polyamide segment $R_1$ and/or $R_2$ are selected from the following group: aliphatic C4-C44 diacid, cycloaliphatic C8-C36 diacid, aromatic diacid, preferably TPA, IPA, NDA, and also mixtures and, respectively, combinations thereof, preferably having been selected from the following group: adipic acid, sebacic acid, dodecanedioic acid, terephthalic acid, isophthalic acid, cyclohexanedicarboxylic acid and mixtures thereof, succinic acid, glutaric acid, adipic acid, pimelic acid, suberic acid, azelaic acid, sebacic acid, undecanedioic acid, dodecanedioic acid, brassylic acid, tetradecanedioic acid, pentadecanedioic acid, hexadecanedioic acid, heptadecanedioic acid, octadecanedioic acid,

nonadecanedioic acid, eicosane-dioic acid, japanic acid, cyclohexanedicarboxylic acid, dimer fatty acid having 36 or 44 carbon atoms, isophthalic acid, terephthalic acid, naphthalenedicarboxylic acid.

**23.** The polyamide elastomer as claimed in any of the preceding claims, **characterized in that** the other diamine of the polyamide segment is selected from the following group: branched or unbranched aliphatic C4-C18 diamine, cycloaliphatic C8-C20 diamine, diamine having an aromatic ring, preferably MXDA, PXDA, methylpentanediamine, hexanediamine, trimethylhexamethylenediamine, methyloctanediamine, nonanediamine, decanediamine, dodecanediamine, PACM, norbornanediamine, 1,3-bis(aminomethyl)cyclohexane, and also mixtures and, respectively, combinations thereof.

**24.** The polyamide elastomer as claimed in any of the preceding claims, **characterized in that** component (c) is selected from the following group: caprolactam, laurolactam, aminocaproic acid, aminolauric acid, aminoundecanoic acid, amino acids of the $\alpha,\omega$ class having 4, 6, 7, 8, 11 or 12 carbon atoms, examples being pyrrolidin-2-one, $\varepsilon$-caprolactone, enantholactone, caprylolactam, laurolactam, and the following amino acids of the $\alpha$, $\omega$ class: 1,4-aminobutanoic acid, 1,6-aminohexanoic acid, 1,7-aminoheptanoic acid, 1,8-aminooctanoic acid, 1,11-aminoundecanoic acid and 1,12-aminododecanoic acid.

**25.** The polyamide elastomer as claimed in any of the preceding claims, **characterized in that** $R_2$ has been provided on the basis of a diol selected from the following group: aliphatic C2-C36 diol, cycloaliphatic C6-C36 diol, C8-C36 diol having an aromatic ring, diol containing ether groups, polycaprolactonediol, or a combination thereof, and particularly preferably selected from the following group: ethanediol, propanediol, butanediol, hexanediol, cyclohexanedimethanol, C36 dimer fatty diol, C2-C4 polyoxyalkylenediols, particularly having a molar weight in the range from 200 to 2000 g/mol, polycaprolactonediol having a molar weight in the range from 500 to 3000 g/mol, particularly preferably from 750 to 2000 g/mol, and also combinations thereof.

**26.** The polyamide elastomer as claimed in any of the preceding claims, **characterized in that** $R_2$ is provided on the basis of a polyether segment selected from the following group: polyoxyethylenediamine, polyoxyethylenedicarboxylic acid, polyoxypropylenediamine, polyoxypropylenedicarboxylic acid, polyoxytetramethylenediamine, polyoxytetramethylenedicarboxylic acid having a number-average molar weight in the range from 200 to 2500 g/mol, their copolymers or mixtures, and also copolymers with neopentyl glycol.

**27.** The polyamide elastomer as claimed in any of the preceding claims, **characterized in that** it is a polyetheramide, a polyesteramide, or a polyetheresteramide, based on a polyamide system selected from the following group: MACM12, MACM18, MACM12/PACM12, MACM18/PACM18, copolyamides involving 6T, 9T, 10T, and/or 12T units, and, respectively, mixtures and/or combinations thereof.

**28.** The polyamide elastomer as claimed in any of the preceding claims, **characterized in that** it is a polyetheramide, a polyesteramide, or a polyetheresteramide, having a polyester fraction and/or, respectively, ester fraction derived from a C36 diol and/or adipic acid and/or sebacic acid and/or C36 dimer fatty acid and/or terephthalic acid.

**29.** The polyamide elastomer as claimed in any of the preceding claims, **characterized in that** it also comprises dyes and/or additives, where the dye can be a photochromic dye which is reversibly excitable by UV or short-wave VIS, preferably a dye based on spirooxazines, and/or where the additives are stabilizers, such as UV stabilizers, heat stabilizers, free-radical scavengers, and/or are processing aids, plasticizers, or further polymers, and/or are functional additives preferably for influencing optical properties, e.g. in particular refractive index, or are a combination or mixture thereof.

**30.** A transparent, preferably haze-free article with at least one region or one layer made of a polyamide elastomer as claimed in any of the preceding claims.

**31.** The article as claimed in the preceding claim for high-specification optical applications, **characterized in that**, if the thickness of the layer made of the polyamide elastomers is 2 mm, the transmittance of the article is more than 70%, preferably more than 85%, in the wavelength range from 500 to 700 mm, and/or the haze of the article is at most 20%, preferably at most 15%, particularly preferably at most 10%.

**32.** The article as claimed in claim 30 or 31, **characterized in that** it is a foil, a profile, a tube, a hollow body or an optically variable filter or an optical lens, preferably an ophthalmic lens, particularly preferably an element with spectral filter action, for example taking the form of a spectacle lens, sun lens, corrective lens, or optical filter, or

can take the form of a switching assembly for optical signal processing, ski goggles, a visor, safety spectacles, a photo recording system, display, optical data storage system, or windows of buildings or of vehicles, or can be a decorative element or a structural element, for example in the form of a spectacle frame, toy, or cover, particularly in the form of a mobile-telephone case, a part of electronic devices, a coating, particularly of packaging, of decorative items, of sports equipment, or of cladding, preferably in the automobile sector.

**33.** A process for the production of an article as claimed in any of claims 30 to 32, **characterized in that** a polyamide elastomer as claimed in any of claims 1 to 29 is molded in an extrusion process, in an injection-molding process or in an in-mold-coating process, to give the article.

**34.** A process for the production of a polyamide elastomer as claimed in any of claims 1 to 29, **characterized in that**, in a single-stage process, the polyamide-forming components are mixed together with the ester component or polyester component and/or polyether component, where the ratio of the end groups of the individual components is preferably equimolar, and are polycondensed at temperatures which are preferably in the range from 180 to 300°C until the desired viscosity has been reached.

**35.** A process for the production of a polyamide elastomer as claimed in any of claims 1 to 29, **characterized in that**, in particular for a specifically blockwise structure, particularly in relation to the polyamide unit, or in the event of the use of lactams as raw material, in a two-stage process, a first stage begins by forming the polyamide units provided with carboxy or amino end groups, from components a), b) and c) at temperatures which are preferably from 180 to 320°C and at pressures which are preferably from 0 to 20 bar, and then these are polycondensed in the second stage with the soft-segment units at atmospheric pressure or reduced pressure, in particular in vacuo, at temperatures which are preferably in the range from 180 to 280°C, to give the high-molecular-weight copolymer.

## Revendications

**1.** Élastomère-polyamide transparent de structure

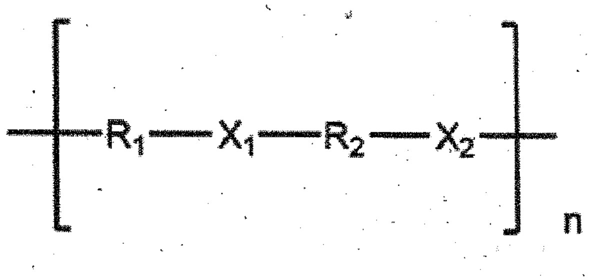

(1)

dans laquelle $R_1$ est un segment-polyamide constitué de

(a) 10 - 100 % en moles de bis(aminocyclohexyl)propane et/ou bis(aminocyclohexyl)méthane substitué par alkyle et

0 - 90 % en moles d'autres diamines cycloaliphatiques en $C_6$-$C_{36}$ et/ou de diamines aliphatiques en $C_2$-$C_{36}$ et/ou de diamines aromatiques en $C_6$-$C_{36}$,
les données de concentration se rapportant à la quantité totale de diamine dans le segment-polyamide, et

(b) d'acides dicarboxyliques aliphatiques en $C_4$-$C_{36}$ et/ou d'acides dicarboxyliques cycloaliphatiques en $C_8$-$C_{36}$ et/ou d'acides dicarboxyliques aromatiques en $C_8$-$C_{36}$ et
(c) éventuellement de lactames et/ou d'acides aminocarboxyliques en $C_6$-$C_{12}$.

$R_2$ étant choisi dans le groupe des radicaux bivalents : polyoxyalkylène en $C_2$-$C_5$ linéaire ou ramifié, polyoléfine, polysiloxane ayant une masse moléculaire moyenne en nombre dans la plage de 200 - 3000 g/mole ; alkylène en $C_2$-$C_{36}$ linéaire ou ramifié, substitué ou non substitué, cycloalkylène en $C_6$-$C_{36}$, aryle en $C_6$-$C_{20}$, polycaprolactone,

polyester à base de diols et d'acides dicarboxyliques aliphatiques ou cycloaliphatiques, polycarbonate aliphatique ainsi que copolymères ou mélanges de ces éléments,
et $X_1$ et $X_2$ étant indépendamment l'un de l'autre des liaisons amide (CONH) ou ester (COO),
et l'élastomère-polyamide transparent comportant une phase amorphe, due au segment contenant l'élément $R_2$, dont la température de transition vitreuse est au maximum de 20°C.

**2.** Élastomère-polyamide selon la revendication 1, dans lequel $R_1$ représente dans la plage de 40-95 % en poids et $R_2$ représente dans la plage de 5-60 % en poids, les plages de 50 à 85 % en poids pour $R_1$ et de 15 à 50 % en poids pour $R_2$ étant préférées.

**3.** Élastomère-polyamide selon l'une quelconque des revendications précédentes, dans lequel le segment-polyamide $R_1$ consiste à raison d'au moins 20 % en moles, de préférence d'au moins 30 % en moles, de façon particulièrement préférée d'au moins 40 % en moles en bis(aminocyclohexyl)méthane substitué par alkyle.

**4.** Élastomère-polyamide selon l'une quelconque des revendications 1-2 précédentes, dans lequel le segment-polyamide $R_1$ consiste en totalité en bis(aminocyclohexyl)méthane substitué par alkyle.

**5.** Élastomère-polyamide selon l'une quelconque des revendications précédentes, dans lequel le bis(aminocyclohexyl) méthane substitué par alkyle est le bis(4-amino-3-méthyl-cyclohexyl)méthane (MACM).

**6.** Élastomère-polyamide selon l'une quelconque des revendications précédentes, dans lequel le segment-polyamide $R_1$ présente une masse moléculaire moyenne en nombre dans la plage de 500-5000 g/mole, de préférence dans la plage de 700-4000 g/mole, et de façon particulièrement préférée dans la plage de 750-3000 g/mole.

**7.** Élastomère-polyamide selon l'une quelconque des revendications précédentes, **caractérisé en ce que** $X_1$=$X_2$= (COO), et **en ce que** le radical $R_2$ est donné en tant groupe alkylène en $C_2$-$C_{36}$ linéaire ou ramifié, substitué ou non substitué, cycloalkylène en $C_6$-$C_{36}$, aryle en $C_6$-$C_{20}$, polycaprolactone, polyester à base de diols et d'acides dicarboxyliques aliphatiques ou cycloaliphatiques, polycarbonate aliphatique, polyoxyalkylène en $C_2$-$C_4$ ainsi que copolymères et mélanges de ceux-ci.

**8.** Élastomère-polyamide selon l'une quelconque des revendications précédentes, **caractérisé en ce que** $X_1$=$X_2$= (CONH), et **en ce que** le radical $R_2$ est donné en tant que polyoxyalkylène en $C_2$-$C_4$, polyoléfine, polysiloxane ayant une masse moléculaire moyenne en nombre dans la plage de 200 - 3000 g/mole (de préférence 300-2500 g/mole) ainsi que copolymères et mélanges de ces éléments.

**9.** Élastomère-polyamide selon l'une quelconque des revendications précédentes, **caractérisé par** une phase amorphe, due de préférence au segment contenant l'élément $R_2$, dont la température de transition vitreuse est inférieure à 0 °C, de façon particulièrement préférée inférieure à -20°C.

**10.** Élastomère-polyamide selon l'une quelconque des revendications précédentes, **caractérisé par** une transmission d'au moins 70 %, de préférence d'au moins 80 %, de façon particulièrement préférée de plus de 85 %.

**11.** Élastomère-polyamide selon l'une quelconque des revendications précédentes, **caractérisé par** un voile d'au maximum 20 %, de préférence d'au maximum 15 %, de façon particulièrement préférée d'au maximum 10 %.

**12.** Élastomère-polyamide selon l'une quelconque des revendications précédentes, **caractérisé en ce que** le segment-polyamide $R_1$ et le segment contenant l'élément $R_2$ sont en disposition statistique, alterne ou séquentielle.

**13.** Élastomère-polyamide selon l'une quelconque des revendications précédentes, dans lequel le segment-polyamide $R_1$ est un segment rigide-polyamide ou segment rigide-copolyamide microcristallin, celui-ci présentant de préférence une enthalpie de fusion dans la plage de 4-40 J/g, de préférence dans la plage de 4-25 J/g et/ou celui-ci étant doté de préférence d'une température de transition vitreuse supérieure à au moins 50°C, de préférence de plus de 80 °C, et de façon particulièrement préférée de plus de 100 °C, et/ou celui-ci présentant une température de fusion d'au moins 120 °C, de préférence d'au moins 135 °C et en particulier d'au moins 150 °C.

**14.** Élastomère-polyamide selon l'une quelconque des revendications précédentes, **caractérisé en ce que** $R_1$ est constitué de bis-(4-amino-3-méthyl-cyclohexyl)-méthane (MACM) et d'au moins un acide dicarboxylique aliphatique comportant 10-36 atomes de carbone, et l'autre diamine cycloaliphatique présente en outre étant le bis-(4-aminocyclohexyl)méthane (PACM) et/ou l'isophoronediamine (IPD) avec ou sans substitution.

**15.** Élastomère-polyamide selon l'une quelconque des revendications précédentes, **caractérisé en ce que** $R_1$ est constitué de bis-(4-amino-3-méthyl-cyclohexyl)-méthane (MACM) et de bis-(4-aminocyclohexyl)méthane (PACM) en association avec un acide dicarboxylique aliphatique ayant 10-36 atomes de carbone, de préférence ayant 12 atomes de carbone, en particulier la concentration du bis(4-aminocyclohexyl)méthane (PACM) de préférence étant supérieure à 40 % en moles, de façon particulièrement préférée étant supérieure à 55 % en moles.

**16.** Élastomère-polyamide selon l'une quelconque des revendications 1-12, **caractérisé en ce que** le segment-polyamide $R_1$ est un segment rigide-polyamide ou segment rigide-copolyamide amorphe, celui-ci présentant une enthalpie de fusion dans la plage de moins de 4 J/g, et/ou celui-ci présentant une température de transition, vitreuse d'au moins 50 °C, de préférence de plus de 80 °C et de façon particulièrement préférée de plus de 100 °C.

**17.** Élastomère-polyamide selon la revendication 16, **caractérisé en ce que** le segment-polyamide $R_1$ est à base de bis-(4-amino-3-méthyl-cyclohexyl)-méthane (MACM) et d'acide isophtalique et/ou d'acide téréphtalique et/ou d'un acide dicarboxylique aliphatique en $C_4$-$C_{36}$, de préférence d'un acide dicarboxylique en $C_{12}$ et/ou d'un acide dicarboxylique cycloaliphatique en $C_8$-$C_{36}$.

**18.** Élastomère-polyamide selon la revendication 16 ou 17, **caractérisé en ce que** le segment-polyamide $R_1$ consiste en MACMI, MACMI/MACMT, MACMI/MACMT/12, MACMI/12, MACMT/12, le teneur en lauryllactame étant de préférence inférieure à 50 % en moles, de façon particulièrement préférée inférieure à 35 % en moles.

**19.** Élastomère-polyamide selon l'une quelconque des revendications précédentes, **caractérisé en ce que** le segment-polyamide $R_1$ est un segment rigide-polyamide à base d'acides dicarboxyliques aromatiques ayant de 10 à 18 atomes de carbone et/ou d'acides dicarboxyliques aliphatiques ayant de 6 à 36 atomes de carbone ou un mélange de tels homopolyamides et/ou copolyamides, un polyamide étant choisi de préférence dans le groupe : 6I/MACMI/MACMT, 6I/6T/MACMI, MACMI/MACM36, MACM6-18, MACM6-18/PACM6-18, polyamides contenant du lactame tels que 12/MACMI, 12/MACMT, 12/MACM6-18 ou un mélange de ceux-ci.

**20.** Élastomère-polyamide selon l'une quelconque des revendications précédentes, **caractérisé en ce que** le segment-polyamide $R_1$ consiste en un segment rigide-copolyamide à base d'au moins un acide dicarboxylique et de bis (aminocyclohexyl)méthane substitué par alkyle et d'une diamine ayant un noyau aromatique, de préférence à base de MACM et MXD, l'acide dicarboxylique pouvant être aromatique et/ou aliphatique, et ce segment consistant de préférence en MACMI/MXDI, MACMI/MXD6 ou MACMI/6I/MXDI, MACMI/6I/MXD6.

**21.** Élastomère-polyamide selon l'une quelconque des revendications précédentes, **caractérisé en ce qu'**il présente une viscosité en solution ($\eta_{rel}$), mesurée dans le m-crésol sous forme de solution à 0,5 % en poids, à une température de 20 °C, comprise entre 1,3 et 3,0, de façon particulièrement préférée entre 1,4 et 2,5, et/ou en ce qu'il présente un module d'élasticité en traction de moins de 1 500 MPa, de préférence de moins de 1 000 MPa, de façon particulièrement préférée de moins de 500 MPa.

**22.** Élastomère-polyamide selon l'une quelconque des revendications précédentes, **caractérisé en ce que** les acides dicarboxyliques du segment-polyamide $R_1$ et/ou $R_2$ sont choisis dans le groupe suivant : diacide aliphatique en $C_4$-$C_{44}$, diacide cycloaliphatique en $C_8$-$C_{36}$, diacide aromatique, de préférence TPS, IPS, NDS, ainsi que des mélanges ou associations de ceux-ci, ces acides étant choisis de préférence dans le groupe : acide adipique, acide sébacique, acide dodécanedioïque, acide téréphtalique, acide isophtalique, acide cyclohexanedicarboxylique et mélanges de ceux-ci, acide succinique, acide glutamique, acide adipique, acide pimélique, acide subérique, acide azélaïque, acide sébacique, acide undécanedioïque, acide dodécanedioïque, acide brassylique, acide tétradécanedioïque, acide pentadécanedioïque, acide hexadécanedioïque, acide heptadécanedioïque, acide octadécanedioïque, acide nonadécanedioïque, acide eicosanedioïque, acide japanique, acide cyclohexanedicarboxylique, acide gras dimère ayant 36 ou 44 atomes de carbone, acide isophtalique, acide téréphtalique, acide naphtalènedicarboxylique.

**23.** Élastomère-polyamide selon l'une quelconque des revendications précédentes, **caractérisé en ce que** l'autre diamine du segment-polyamide est choisie dans le groupe suivant : diamine aliphatique en $C_4$-$C_{18}$ ramifiée ou non ramifiée, diamine cycloaliphatique en $C_8$-$C_{20}$, diamine à noyau aromatique, de préférence MXDA, PXDA, méthylpentanediamine, hexanediamine, triméthylhexaméthylènediamine, méthyloctanediamine, nonanediamine, décanediamine, dodécanediamine, PACM, norbonanediamine, 1,3-bis(aminométhyl)cyclohexane ainsi que mélanges

ou associations de ces amines.

24. Élastomère-polyamide selon l'une quelconque des revendications précédentes, **caractérisé en ce que** le composant (c) est choisi dans le groupe : caprolactame, laurylIactame, acide aminocaproïque, acide aminolaurique, acide amino-undécanoïque, acides $\alpha,\omega$-aminés ayant 4, 6, 7, 8, 11 ou 12 atomes de carbone, tels que pyrrolidin-2-one, $\varepsilon$-caprolactame, énantholactame, capryllactame, laurylIactame, acides $\alpha,\omega$-aminés acide 1,4-aminobutanoïque, acide 1,6-aminohexanoïque, acide 1,7-aminoheptanoïque, acide 1,8-amino-octanoïque, acide 1,11-amino-undécanoïque et acide 1,12-aminododécanoïque.

25. Élastomère-polyamide selon l'une quelconque des revendications précédentes, **caractérisé en ce que** $R_2$ est préparé à base d'un diol choisi dans le groupe : diol aliphatique en $C_2$-$C_{36}$, diol cycloaliphatique en $C_6$-$C_{36}$, diol en $C_8$-$C_{36}$ à noyau aromatique, diol contenant des groupes éther, polycaprolactone-diol ou associations de ceux-ci, de façon particulièrement préférée est choisi dans le groupe : éthanediol, propanediol, butanediol, hexanediol, cyclohexanediméthanol, diol gras dimère en $C_{36}$, polyoxyalkylènediols en $C_2$-$C_4$, en particulier ayant une masse moléculaire dans la plage de 200-2000 g/mole, polycaprolactone-diol ayant une masse moléculaire dans la plage de 500-3000 g/mole, de façon particulièrement préférée de 750-2000 g/mole, ainsi qu'associations de ceux-ci.

26. Élastomère-polyamide selon l'une quelconque des revendications précédentes, **caractérisé en ce que** $R_2$ est préparé à base d'un segment polyéther choisi dans le groupe : polyoxyéthylènediamine, acide polyoxyéthylènedicarboxylique, polyoxypropylènediamine, acide polyoxypropylènedicarboxylique, polyoxytétraméthylènediamine, acide polyoxytétraméthylène-dicarboxylique ayant une masse moléculaire moyenne en nombre dans la plage de 200 à 2500 g/mole, leurs copolymères ou mélanges ainsi que copolymères avec le néopentylglycol.

27. Élastomère-polyamide selon l'une quelconque des revendications précédentes, **caractérisé en ce qu'**il s'agit d'un polyétheramide, d'un polyesteramide ou d'un polyétheresteramide à base d'un système polyamide choisi dans le groupe : MACM12, MACM18, MACM12/PACM12, MACM18/PACM18, copolyamides avec inclusion d'unités 6T, 9T, 10T, et/ou 12T, ou mélanges et/ou associations de ceux-ci.

28. Élastomère-polyamide selon l'une quelconque des revendications précédentes, **caractérisé en ce qu'**il s'agit d'un polyétheramide, d'un polyesteramide ou d'un polyétheresteramide comportant un fragment ester et/ou polyester à base d'un diol en $C_{36}$ et/ou d'acide adipique et/ou d'acide sébacique et/ou d'acide gras dimère en $C_{36}$ et/ou d'acide téréphtalique.

29. Élastomère-polyamide selon l'une quelconque des revendications précédentes, **caractérisé en ce qu'**il contient en outre des colorants et/ou additifs, le colorant pouvant consister en un colorant photochrome qui est excitable réversiblement aux UV ou à la lumière visible de courte longueur d'onde, de préférence en un colorant à base de spiro-oxazines, et/ou les additifs consistant en des stabilisants tels que des stabilisants UV, des stabilisants thermiques, des capteurs de radicaux et/ou en des adjuvants de mise en oeuvre, des plastifiants, d'autres polymères et/ou en des additifs fonctionnels de préférence destinés à influer sur les propriétés optiques comme en particulier sur l'indice de réfraction, ou en des associations ou mélanges de ceux-ci.

30. Article transparent, de préférence exempt de voile, comportant au moins une zone ou une couche en un élastomère-polyamide selon l'une quelconque des revendications précédentes.

31. Article selon la revendication précédente pour des applications optiques de grande valeur, **caractérisé en ce qu'**à une épaisseur de couche de 2 mm de la couche à base des élastomères-polyamide, il présente une transmission de plus de 70 %, de préférence de plus de 85 %, dans la plage de longueurs d'onde de 500-700 nm, et/ou un voile d'au maximum 20 %, de préférence d'au maximum 15 %, de façon particulièrement préférée d'au maximum 10 %.

32. Article selon la revendication 30 ou 31, **caractérisé en ce qu'**il s'agit d'un film, d'un profilé, d'un tube, d'un corps creux ou d'un filtre optiquement variable ou d'une lentille optique, de préférence d'une lentille ophtalmique, de façon particulièrement préférée d'un élément à effet de filtre spectral comme par exemple sous forme de verre de lunettes, lentille solaire, lentille correctrice, filtre optique et en tant que commutateur pour le traitement de signaux optiques, lunettes de ski, visière, lunettes protectrices, enregistrement photographique, afficheur, mémoire optique de données, fenêtres de bâtiments et de véhicules, ou d'un élément décoratif ou d'un élément structural comme par exemple en tant que monture de lunettes, jouet, élément de couverture, notamment en tant que coque de téléphone mobile, élément d'appareils électroniques, revêtement en particulier d'emballages, articles de décoration, articles

de sport, habillages de préférence dans le secteur automobile.

**33.** Procédé pour la fabrication d'un article selon l'une quelconque des revendications 30 - 32, **caractérisé en ce que** qu'un élastomère-polyamide selon l'une quelconque des revendications 1 - 29 est moulé en l'article, dans un procédé d'extrusion, un procédé de moulage par injection ou un procédé de rétro-injection.

**34.** Procédé pour la production d'un élastomère-polyamide selon l'une quelconque des revendications 1 - 29, **caractérisé en ce que** dans un procédé en une seule étape on mélange les composants constituant le polyamide, conjointement avec le composant ester ou polyester et/ou le composant polyéther, en un rapport de préférence équimolaire des groupes terminaux des composants individuels et on les polycondense à des températures de préférence dans la plage de 180 à 300 °C jusqu'à ce que soit atteinte la viscosité désirée.

**35.** Procédé pour la production d'un élastomère-polyamide selon l'une quelconque des revendications 1 - 29, **caractérisé en ce qu'**en particulier pour une structure séquencée recherchée, notamment en ce qui concerne l'unité polyamide, ou lorsqu'on utilise des lactames comme matière première, dans un processus en deux étapes, dans une première étape on forme d'abord les unités polyamide munies de groupes terminaux carboxy ou amino, à partir des composants a), b) et c), à des températures de préférence de 180 à 320 °C et sous des pressions de préférence de 0 à 20 bars, qui sont ensuite, dans une deuxième étape, polycondensées avec les unités de segment souple, sous la pression atmosphérique ou sous pression réduite, en particulier sous vide, à des températures de préférence dans la plage de 180 à 280 °C, en le copolymère de masse moléculaire élevée.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0163902 A1
- DE 10195908
- EP 1783157 A1
- EP 0303489 A1
- EP 0221188 A1
- EP 0313861 A1
- DE 2405646 C3
- US 20050165210 A1
- EP 1314750 A1
- US 5280087 A
- WO 2007074086 A
- US 2004013862 A
- EP 1369447 A
- EP 1712581 A
- EP 1788025 A